# EUROPEAN PATENT APPLICATION

(11) **EP 2 584 506 A1**
(43) Date of publication of application: **24.04.2013**
(21) Application number: 11185677.9
(22) Date of filing: 18.10.2011
(51) Int. Cl.: G06Q 10/10

(54) **Method and system for determining eligible communication partners utilizing an entity discovery engine**

(71) Applicant: Research In Motion Limited, Waterloo, ON N2L 3W8 (CA)
(72) Inventor: McColgan, Brian Edward Anthony, Mississauga, Ontario L4W 0B5 (CA); Preiss, Bruno Richard, Waterloo, Ontario N2L 3W8 (CA)
(74) Representative: Moore, Barry

(57) **Abstract**

A method and system for determining eligible communication partners utilizing an entity discovery engine is provided. The entity discovery engine coordinates the discovery of eligible communication partners. The entity discovery engine enables participants to discover other communication partners through the application of inputs. Starting with a data set of potential communication partners, the entity discovery engine uses inputs to identify eligible communication partners from the data set of potential communication partners. Inputs include policies that are applied broadly to limit categories of potential communication partners from being suggested as eligible communication partners. Identified eligible communication partners are suggested to enable communication relationships. Suggested eligible communication partners may be selected by a user or by an electronic communication device for initiating a communication relationship. In this manner, the entity discovery engine enables the discovery of new communication partners.

## Description

### TECHNICAL FIELD

The following relates generally to networked computing and more specifically to communication partner discovery.

### BACKGROUND

Social network systems allow users to interact with other users online using network communications. Users typically have a list of friends with whom they interact. Social network systems allow users to search for other users to be added to their list of friends. Social network systems also allow users to discover new friends through the suggestion of other users with whom the social network system believes a user would like to engage in social network interactions. Suggestions are made through the identification of common friends (i.e., friend of a friend), common employers or some other common characteristic.

### SUMMARY

In one example there is provided a method of operating an entity discovery engine to suggest eligible communication partners, the method comprising: applying a metadata to a first data set of a plurality of potential communication partner entries to obtain a criteria set, each potential communication partner associated with information, the criteria set comprising a reduced set of the plurality of potential communication partner entries; normalizing the criteria set into an information set, the information set comprising a subset of the information associated with each of the reduced plurality of potential communication partner entries of the criteria set; applying a constraint set to the information set to reduce the number of the plurality of potential communication partner entries of the information set; evaluating a policy for consistency and applicability to produce an evaluated policy; applying the evaluated policy to the information set to produce a result set of eligible communication partner entries; and suggesting the result set.

In another example, there is provided a computer readable medium comprising computer executable instructions for operating an entity discovery engine to suggest eligible communication partners, the computer executable instructions comprising instructions for: applying a metadata to a first data set of a plurality of potential communication partner entries to obtain a criteria set, each potential communication partner associated with information, the criteria set comprising a reduced set of the plurality of potential communication partner entries; normalizing the criteria set into an information set, the information set comprising a subset of the information associated with each of the reduced plurality of potential communication partner entries of the criteria set; applying a constraint set to the information set to reduce the number of the plurality of potential communication partner entries of the information set; evaluating a policy for consistency and applicability to produce an evaluated policy; applying the evaluated policy to the information set to produce a result set of eligible communication partner entries; and suggesting the result set.

In another example, there is provided an entity discovery engine operable to suggest eligible communication partners, the entity discovery engine comprising a processor and memory, the memory storing computer executable instructions for: applying a metadata to a first data set of a plurality of potential communication partner entries to obtain a criteria set, each potential communication partner associated with information, the criteria set comprising a reduced set of the plurality of potential communication partner entries; normalizing the criteria set into an information set, the information set comprising a subset of the information associated with each of the reduced plurality of potential communication partner entries of the criteria set; applying a constraint set to the information set to reduce the number of the plurality of potential communication partner entries of the information set; evaluating a policy for consistency and applicability to produce an evaluated policy; applying the evaluated policy to the information set to produce a result set of eligible communication partner entries; and suggesting the result set.

### BRIEF DESCRIPTION OF THE DRAWINGS

Embodiments will now be described by way of example only with reference to the appended drawings wherein:

FIG. 1 is a block diagram showing an example network communication system comprising a social network system;

FIG. 2 is a diagram showing the example social network data store of FIG. 1 comprising user account entries;

FIG. 3 is a diagram showing an example network communication system comprising an entity discovery engine;

FIG. 4 is a process diagram showing a first exemplary eligible communication partner suggestion process;

FIG. 5 is a diagram showing a first example data set;

FIG. 6 is a diagram showing a second example data set;

FIG. 7 is a diagram showing an example normalized data set;

FIG. 8 is a diagram showing an example result set;

FIG. 9 is a process diagram showing a second exemplary eligible communication partner suggestion process;

FIG. 10 is a diagram showing an example criteria set;

FIG. 11 is a diagram showing an example reduced information set of the example criteria set of FIG. 10;

FIG. 12 is a diagram showing an example information set of normalized information from the second example data set of FIG. 6 and from the normalized data set of FIG. 7;

FIG. 13 is a diagram showing another example information set corresponding to constrained information from the example reduced information set of FIG. 11 and from the example information set of normalized information of FIG. 12;

FIG. 14 is a block diagram showing an example network communication system comprising a rich communication suite system; and

FIG. 15 is a block diagram of an example configuration for a mobile device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

Although the principles discussed below are applicable to any electronic communication device, examples will be provided for a mobile communication device, which is one of many types of electronic communication devices.

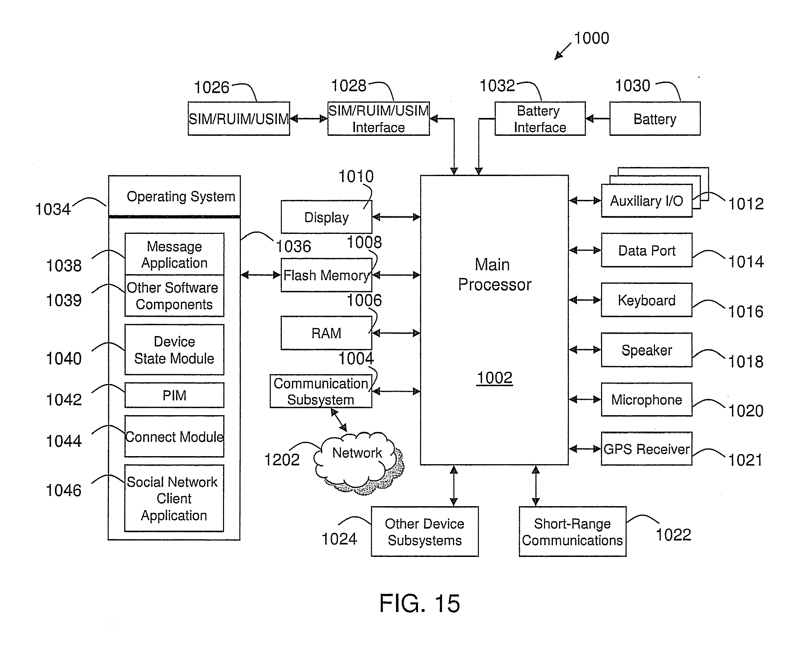

For clarity in the description below, mobile communication devices may be commonly referred to as "mobile devices" for brevity. Examples of applicable mobile devices may include, without limitation, cellular phones, smart-phones, wireless organizers, pagers, personal digital assistants, computers, laptops, handheld or other wireless communication devices, wirelessly enabled notebook computers, portable gaming devices, tablet computers, or any other portable electronic communication device with processing and communication capabilities. Further details of a mobile device as described herein are provided in FIG. 15.

For further clarity in the description below, communication partners may include, without limitation, a social network user, and may refer to account information, device information, profile information or user profile information associated with a particular social network user. In addition, communication partners may further include network communication service nodes, location dependent services, presence services, or any other electronic communication device, or information associated with such a device, that is capable of network communication with another electronic communication device, or of enabling network communication with another electronic communication device. Communication partner refers equally to a) information that can be used to communicate with a user via an electronic communication device, such as address or account information; b) an electronic communication device used by a service or a user for network communication, such as a server or mobile device; and c) the service or user itself that instigates, enables or uses the network communication application. One example of a communication partner is a social network friend or buddy.

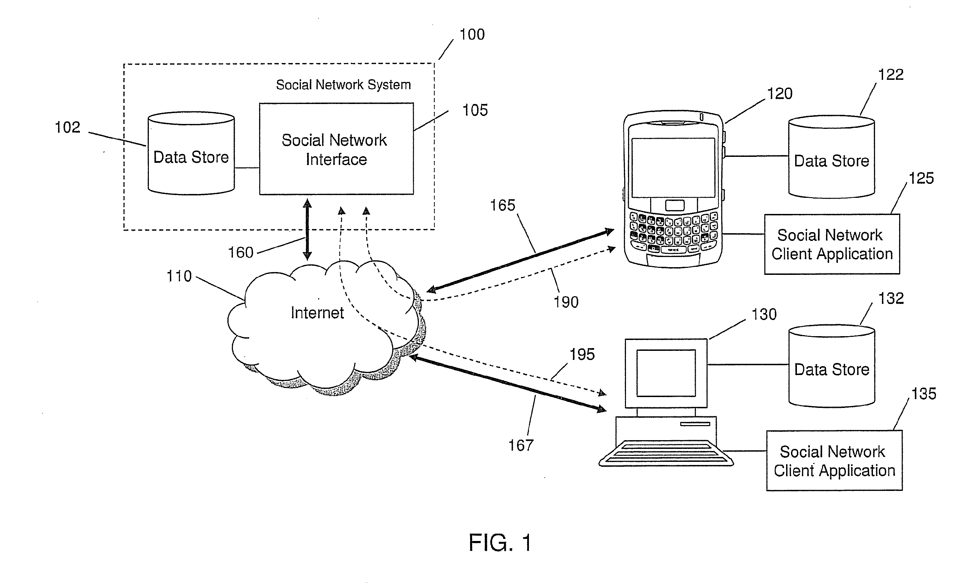

Turning to FIG. 1, there is shown a block diagram of an example network communication system comprising a social network system. Shown in FIG. 1 are social network system 100, internet 110, mobile device 120 and electronic communication device 130. In operation, mobile device 120 communicates with social network system 100, via internet 110, to provide social network functionality to a user of mobile device 120. Similarly, electronic communication device 130 communicates with social network system 100, via internet 110, to provide social network functionality to a user of electronic communication device 130. Social network functionality includes adding friends, posting updates, viewing updates, chatting, sharing pictures and videos, and many other social network features, as is well known.

Social network system 100 includes social network interface 105 and data store 102 which enable social network functionality. Social network interface 105 includes a known set of commands which are accessible from outside parties, such as mobile device 120 and electronic communication device 130. In one example, social network interface 105 includes a social network Application Programming Interface (API) (not shown). Furthermore the social network interface 105 may be provided or enabled by an Application Server (AS) that provides the social network service or a social network application on the mobile device 120. The AS and the social network interface 105 may be embodied as instructions stored on a tangible or non-transitory medium (e.g. optical, magnetic, solid-state, etc) which, when executed cause the AS and the social network interface 105 to be instantiated.

Mobile device 120 and electronic communication device 130 interact with social network system 100 by sending messages via social network interface 105 and by receiving messages and responses from social network interface 105. Social network interface 105 and mobile device 120 communicate according to predetermined protocols, such as Hypertext Transfer Protocol (HTTP), Common Object Request Broker Architecture (CORBA), Remote Method Invocation (RMI), Remote Procedure Call (RPC), Extensible Markup Language (XML) RPC (XML-RPC), Web-services, conforming to Representational State Transfer (REST) parameters (commonly referred to as "RESTful" mechanisms), or Session Initiation Protocol (SIP), for example.

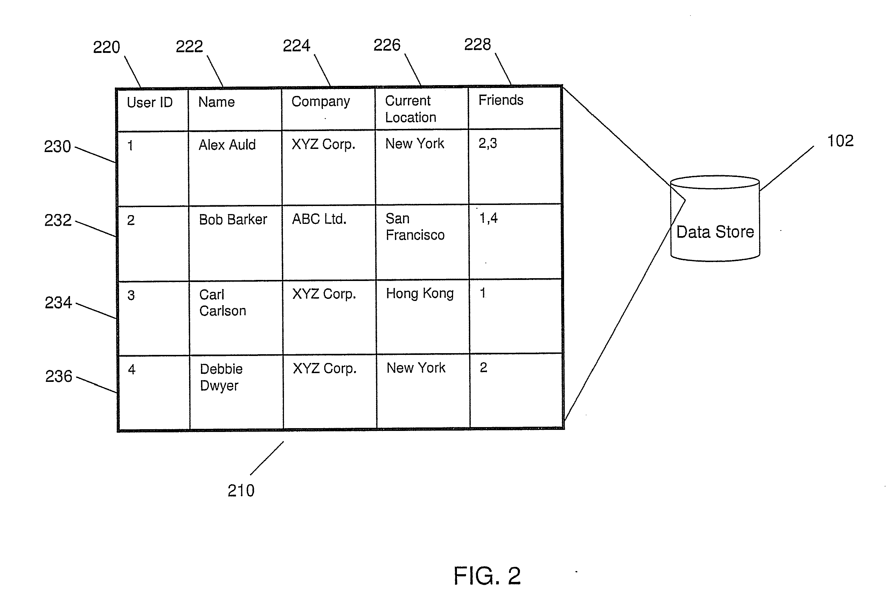

Social network interface 105 provides a gateway for access to information stored in data store 102. Data store 102 stores information about the users of social network system 100, including, for example, information about a user account associated with a user of mobile device 120 or a user of electronic communication device 130. For example, data store 102 stores a user account entry for each user of social network system 100. Each user account entry includes information about a particular user, such as name, age, photo, updates and friend list, for example, as is well known. Further detail of the information stored in data store 102 is provided below with reference to FIG. 2.

Users of social network system 100 are able to interact with the information stored in data store 102, via social network interface 105, using a social network client application. Mobile device 120 comprises social network client application 125 which executes at mobile device 120, and provides a user interface for a user of mobile device 102 to perform social network functionality. Well known social network client applications include HTML user interfaces in a web browser and native applications running outside of a web browser. In one embodiment, social network client application 125 is a Rich Communication Suite (RCS) client as specified by a Functional Description or Technical Realization document available from the GSM Association (GSMA), and which is executing as JavaScript. Social network client application 125 is configured to communicate with social network system 100 via social network interface 105 using well known protocols such as HTTP, HTTPS, SIP, RESTful APIs, and the like.

In one example, a user of mobile device 120 interacts with social network client application 125 to update information associated with their social network user account entry stored in data store 102. Social network client application 125 sends an update message reflective of the updated information to social network system 100 via social network interface 105. In another example, social network interface 105 pushes updates to mobile device 120 upon the occurrence of, for example, an update by a friend of the user of mobile device 120.

As is well known, multiple instances of social network system 100 coexist. Well known examples of social network systems include Facebook and Linkedln. Different social network systems are each enabled by their own social network system. The underlying structure of each different social network system may be different than is shown in FIG. 1, but the general functionality remains the same. It is to be understood that the example social network system 100 shown in FIG. 1 is greatly simplified and only includes the components that are required for an understanding of the present technology. In one example, social network system 100 may comprise distributed components located in different locations and may include other components, such as load balancers, presence services, multimedia services and the like. In another example, data store 102 comprises multiple components, such as networked cloud storage components.

Mobile device 120 comprises social network client application 125 that enables a user of mobile device 120 to use social network system 100. Mobile device 120 is capable of communicating with other networked computing devices via internet 110, as shown by element 165. Mobile device 120 is described in further detail below in relation to FIG. 15. Not shown in FIG. 1 are various network components, such as base stations and wireless gateways that enable mobile device 120 to communicate over internet 110.

Electronic communication device 130 is any electronic device capable of interacting with social network system 100 via the internet 110. Electronic communication device 130 is capable of communicating with other networked computing devices via internet 110, as shown by element 167. Electronic communication device 130 includes any device capable of communicating over the internet using either wired or wireless communication protocols. Electronic communication device 130 may be, for example, a PC with an Ethernet connection, a laptop with a W-Fi connection or a tablet computer with a cellular data connection.

Mobile device 120 and electronic communication device 130 each have a data store, 122 and 132, respectively, which stores information including social network information and may be, for example, RAM, a hard disk, flash memory or any other volatile or non-volatile memory. Data store 122 and 132 stores information, including social network information and, in one example, includes a subset of the information stored in data store 102 or used by social network system 100. The subset of information includes information about a user account for the user of either mobile device 120 or electronic communication device 130 that enables the user to log in to the social network system, as well as other pertinent or cached information. The information is written, accessed, deleted and updated by social network client application 125 or 135.

In operation, social network system 100, mobile device 120 and electronic communication device 130 communicate with each other via internet 110. Social network system 100 communicates with internet 110, as shown by element 160. Mobile device 120 communicates with internet 110, as shown by element 165. Electronic communication device 130 communicates with internet 110, as shown by element 167. Through internet 110, social network system 100 is able to communicate with mobile device 120, as shown by communication channel 190. Through internet 110, social network system 100 is able to communicate with electronic communication device 130, as shown by communication channel 195.

Communication channels 190 and 195 enable social network system functionality. By way of example, social network system functionality includes a status update by a user of electronic communication device 130. One example status update occurs when the user of electronic communication device 130 updates their company upon switching jobs. To update their company, using electronic communication device 130, and social network client application 135 executing thereat, the user inputs their new company into social network client application 135, using input devices of electronic communication device 130, such as a keyboard or a touchscreen and the like. Upon completion of entry of the updated company, social network client application 135 sends an update message indicating the updated company to social network system 100, via communication channel 195.

On receipt of the update message, social network system 100 updates data store 102 to reflect the information of the update message. Furthermore, on receipt, or at a later time upon request, social network system 100 provides an indication of the update to a user of mobile device 120, via an update message sent to mobile device 120 using communication channel 190. The update message may be provided to social network client application 125 of mobile device 120 on receipt by social network system 100, or it may be provided upon request, such as, for example, when a login message is received by social network system 100 from mobile device 120. The update message is only sent to mobile device 120 if social network system 100 determines that the user currently associated with mobile device 120 is allowed to see the update and is interested in the update by, for example, a friend relationship between the user accounts currently associated with mobile device 120 and electronic communication device 130. On receipt, social network client application 125 executing at mobile device 120 processes the update message, including updating or displaying a user interface of mobile device 120.

In this manner, social network system 100 coordinates and enables social network functionality among various participants or communication partners, such as a user of mobile device 120 and a user of electronic communication device 130. In one example, many more devices and users utilize social network system 100, as is well known.

Turning now to FIG. 2, there is shown an example view of information stored in data store 102 of FIG. 1. The example information comprises four user account entries stored by data store 102. Data structure210, which is shown as a table, includes information about four example user accounts associated with social network system 100 (of FIG. 1). Each user account has its own entry, depicted in FIG. 2 as account entries 230, 232, 234 and 236. Each account entry includes information associated with a particular user account and, in this example, includes user id 220, name 222, company 224, current location 226 and friends 228. In one example, user account entries comprise additional or lesser information and are stored in other forms or formats including, for example, multiple records among multiple tables in a relational database.

User id 220 is any information capable of uniquely identifying a particular user account. Name 222 is information about the name of the user associated with the user account. Company 224 is information about the employer of the user associated with the user account. Current location 226 is information about where the user associated with the user account is located, and may be updated automatically according to known techniques, such as presence or location service updates.

Friends 228 is a list of the user ids of the friends associated with the user account. The user ids of friends 228 indicate that a relationship exists between the user account and at least one other user account, as is well known. In the example shown in FIG. 2, Alex is friends with Bob and Carl; Bob is friends with Alex and Debbie; Carl is friends with Alex; and Debbie is friends with Bob. Friend relationships are typically formed by one user inviting or 'friending' another user through interaction with social network system 100, as is well known.

Friend relationships may also be formed through friend discovery. For example, social network system 100 recognizes that Alex and Debbie share a common characteristic, such as that they both work at the same company or that they are both friends with Bob. Using this information, social network system 100 might suggest to Alex or Debbie that they consider becoming friends with each other. Such a suggestion may be pushed via social network interface 105 (of FIG. 1) to a user's device (such as mobile device 120 or electronic communication device 130 of FIG. 1) or the suggestion may be sent via social network interface 105 to the user's device in response to a request for suggestions.

Providing suggestions based solely on the commonality of characteristics between user accounts may lack sensitivity, context, security or all of these. For example, Alex may not want Debbie to be her friend. As another example, Alex may not be allowed to contact Debbie for legal reasons.

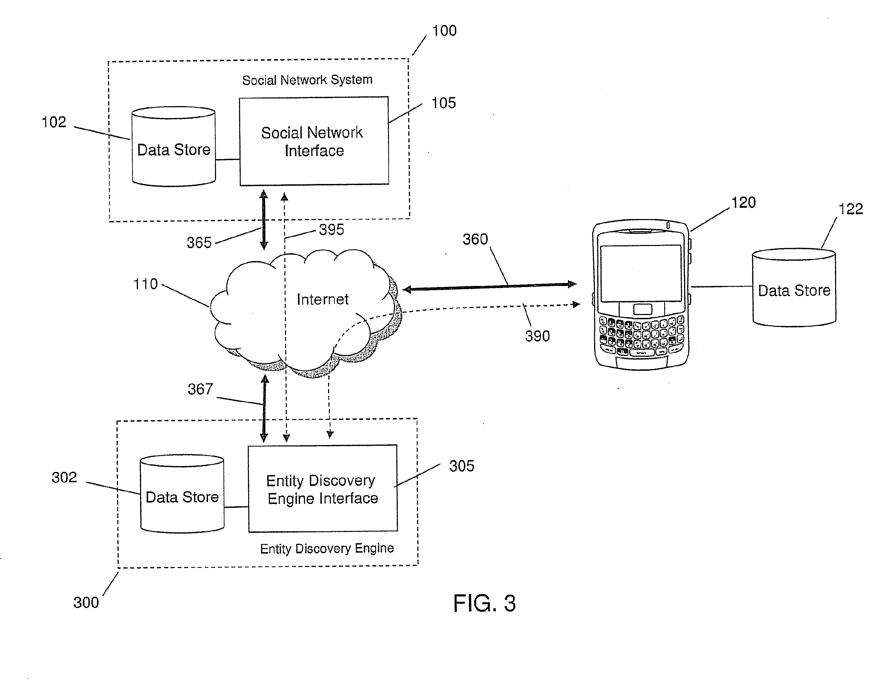

Turning now to FIG. 3, there is shown a block diagram of an example network communication system comprising a social network system 100 and an entity discovery engine 300. Many of the components of the network communication system of FIG. 1 are shown in FIG. 3 and are labelled with the same numeral as in FIG. 1.

Entity discovery engine 300 coordinates the discovery and suggestion of communication partners, such as social network friends. Entity discovery engine 300 coordinates the friend discovery and suggestion process through the coordination and application of numerous inputs. Entity discovery engine 300 applies inputs to a data set of potential communication partners in order to identify which of the potential communication partners are eligible to be suggested as a communication partner. The inputs used by entity discovery engine 300 in the suggestion process permit a nuanced and contextual approach to the suggestion of communication partners. The inputs used by entity discovery engine 300 allow for the suggestion of communication partners that meet contextual criteria, legal requirements and personal preferences, among others, as discussed below. In one example, a description of the inputs used by entity discovery engine 300 during the suggestion process is made available to the requestor of suggestions.

Entity discovery engine 300 comprises entity discovery engine interface 305 and data store 302. Entity discovery engine interface 305 communicates with other network communication devices and provides access to entity discovery functionality through predefined interfaces. Network communication devices, such as mobile device 120 and social network system 100 access the functionality of entity discovery engine 300 via entity discovery engine interface 305. Entity discovery engine interface 305 provides access to the functionality of entity discovery engine 300 through any predefined communication protocol, such as HTTP, HTTPS, SIP, Remote Procedure Calls (RPC) and the like. In one example, the discovery engine interface 305 is a discovery engine API. Furthermore the discovery engine interface 305 may be provided or enabled by an AS that provides the discovery engine service or a discovery engine application on the mobile device 120. The AS and the discovery engine interface 305 may be embodied as instructions stored on a tangible or non-transitory medium (e.g. optical, magnetic, solid-state, etc) which, when executed cause the AS and the discovery engine interface 305 to be instantiated.

Data store 302 stores information relevant to the discovery of communication partners, for use by entity discovery engine 300. Information stored may include a) information about existing users of social network systems, including data sets or user account entries, relationship information, update information and metadata; b) information about a criterion or criteria for identifying eligible communication partners; c) information about policies for use in determining permitted entity discovery; d) information about rules and constraints for determining entity discovery; and e) any other information required to provide entity discovery services at entity discovery engine 300. These different types of information are described in greater detail below.

Entity discovery engine 300 receives information from information sources. Information sources include any source of information, such as, for example, social network system 100, mobile device 120, a presence service (not shown), a Really Simple Syndication (RSS) feed (also not shown) or any other device or service capable of providing information usable by entity discovery engine 300 in suggesting eligible communication partners. In one embodiment, an information source is part of a circle of trust with entity discovery engine 300.

Network communication devices such as mobile device 120 and social network system 100 are provided controlled access to the information stored in data store 302 by entity discovery engine interface 305. Information stored in data store 302 may be stored transiently or may be stored persistently, depending on the nature of the information. In one example, data store 302 is Random Access Memory (RAM), a hard drive, a database, a cloud storage system, a flash drive, or any other device capable of storing information and providing access to the stored information.

The controlled access provided by entity discovery engine interface 305 permits other electronic devices, such as mobile device 120 and social network system 100, to participate in the suggestion of communication partners. For example, mobile device 120 requests a listing of eligible communication partners. In another example, social network system 100 provides information for use in the suggestion of communication partners, such as data sets of user account entries and the like.

In operation, entity discovery engine 300 enables the discovery of communication partners through the use of the information in data store 302. For example, entity discovery engine 300 uses the information in data store 302 to provide a listing of suggested communication partners in response to a request or subscription for suggestions received from mobile device 120. In another example, entity discovery engine 300 uses the information in data store 302 to provide periodic suggestions based on updated or new information becoming known to entity discovery engine 300 through periodic updates and polls and the like. In one example, periodic updates or suggestions are provided in accordance with a subscription from mobile device 120.

With reference to the above mentioned example wherein mobile device 120 requests suggestions of eligible communication partners, entity discovery engine 300 provides a listing of suggested communication partners in response to the request for suggestions received from mobile device 120. The request for suggestions arrives at entity discovery engine 300 from mobile device 120 via internet 110. The request is first sent from mobile device 120 to internet 110 via connection 360 using, for example, wireless data communication protocols. The request is forwarded using well known internet protocol techniques until it arrives at entity discovery engine 300 over connection 367 using, for example, Ethernet communication protocols. In this manner, communication channel 390 is established between mobile device 120 and entity discovery engine 300 for the communication of information.

A request for suggestions comprises a simple request for suggestions, or it comprises a complex request for suggestions. A simple request for suggestions indicates simply that a suggestion for eligible communication partners is desired. A complex request for suggestions includes further information, such as a criterion or criteria for use by the entity discovery engine in generating a listing of suggested eligible communication partners. A criterion may comprise, for example, a desired location in which suggested communication partners are, or a company for which the suggested communication partners work. Combinations of criterion may be supplied in the request. In one example, complex requests include further information for use by entity discovery engine, such as preferences, rules, relationship metadata, policies and the like.

On receipt of a request for suggestions, via entity discovery engine interface 305, entity discovery engine 300 processes the request and determines whether information is required to provide suggestions from, for example, social network system 100 or from another information source, such as a mobile network operator (not shown) or a locked user profile table (also not shown). In one example, entity discovery engine 300 determines that information is required from the originator of the request for suggestions, such as, for example, mobile device 120.

If entity discovery engine 300 determines that information is required from social network system 100 (or multiple instances of social network system 100), a request for the information is sent to social network system 100, via connection 367 to internet 110, and via connection 365 from internet 110 to social network system 100, which forms communication channel 395. Communication channel 395 enables entity discovery engine 300 to communicate with social network system 100 over internet 110. Entity discovery engine interface 305 and social network interface 105 coordinate the communication of messages at their respective ends of communication channel 395. In one example, entity discovery engine 300 is trusted by social network system 100. In another example, communication channel 395 is secured using, for example, encryption techniques such as Transport Layer Security (TLS).

A request sent from entity discovery engine 300 to social network system 100 indicates a request for information from social network system 100. The information is stored in data store 102 and is accessible via social network interface 105. The request may seek information about user accounts operated by social network system 100, including data sets of user account entries that include some or all of the information stored about users, biographical information about user accounts that meet certain criteria, such as location or company, and may alternatively seek bulk data about user accounts managed by social network system 100. In one embodiment, the request from entity discovery engine 300 is made for a list of potential communication partners for use by entity discovery engine 300 in suggesting eligible communication partners to, for example, mobile device 120.

Upon receipt of a request from entity discovery engine 300, social network system 100 generates a response with the requested information and provides the information to entity discovery engine 300.

Alternatively, entity discovery engine 300 may periodically receive information from social network system 100. In such an example, entity discovery engine 300 may not need to request further information from social network system 100 on receipt of a request from mobile device 120 for suggestions, since entity discovery engine 300 already has the information available to make suggestions for eligible communication partners. For example, entity discovery engine 300 receives continuous update information from information sources, either proactively or passively, pursuant to one or more of update messages, push messages, pull messages, subscriptions, RSS feeds, mailing lists, Wiki information sources or any other source of information. In another example, entity discovery engine 300 stores received information, suggestions or intermediate data processed by entity discovery engine 300, at least temporarily, and does not request further information and instead reuses the stored information, suggestions or cached intermediate data previously processed.

It is to be understood that entity discovery engine 300 may alternatively be integral to social network system 100. It is to be further understood that entity discovery engine 300 may alternatively be a part of a mobile network operator system (not shown) or a service provider system (also not shown) and operate within a circle of trust that includes social network system 100 and the mobile network operator system or the service provider system. There may also be multiple instances of entity discovery engine 300 that provide the functionality described herein.

Entity discovery engine 300 suggests eligible communication partners either reactively or proactively. Entity discovery engine 300 uses inputs to identify eligible communication partners for suggestion, as described below.

Entity discovery engine 300 uses inputs to identify eligible communication partners for suggestion. Numerous types of inputs are used by a process to identify and suggest communication partners. Different inputs are useful for identifying and assessing different characteristics of communication partners towards identifying eligible communication partners. The nature and utility of each input will now described. Entity discovery engine 300 receives inputs from numerous information sources, including social network system 100, mobile device 120, a policy provider, a network operator, and any other device capable of providing inputs for use in suggesting eligible communication partners.

Inputs comprise information about existing users of social network systems, including data sets of user account entries, relationship information, update information and metadata that assists entity discovery engine 300 in decoding, establishing and utilizing the relationship information; information about a criterion or criteria for identifying eligible communication partner entities; information about policies for use in determining permitted entity discovery; information about rules and constraints for determining entity discovery; and any other information required to provide entity discovery services at entity discovery engine 300. Entity discovery engine 300 receives inputs used for identifying eligible communication partners either before receiving a request for suggestions, with a request for suggestions, on receipt of a request for suggestions, during the evaluation of a request for suggestions, or periodically and independent from any request for suggestions. In one example, inputs are received from multiple information sources, such as, for example, mobile device 120, social network system 100 and a policy provider, such as a jurisdictional authority.

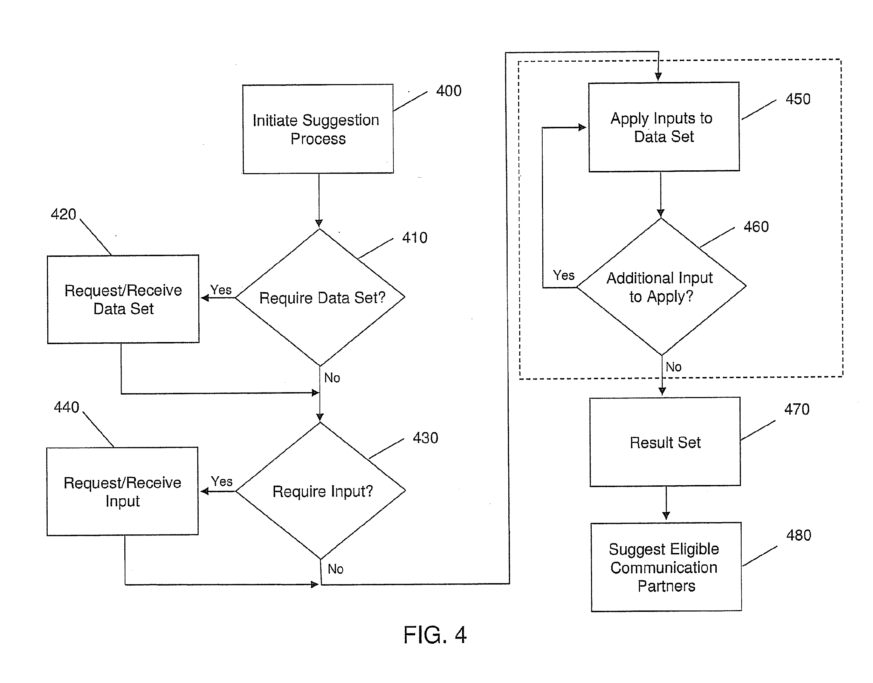

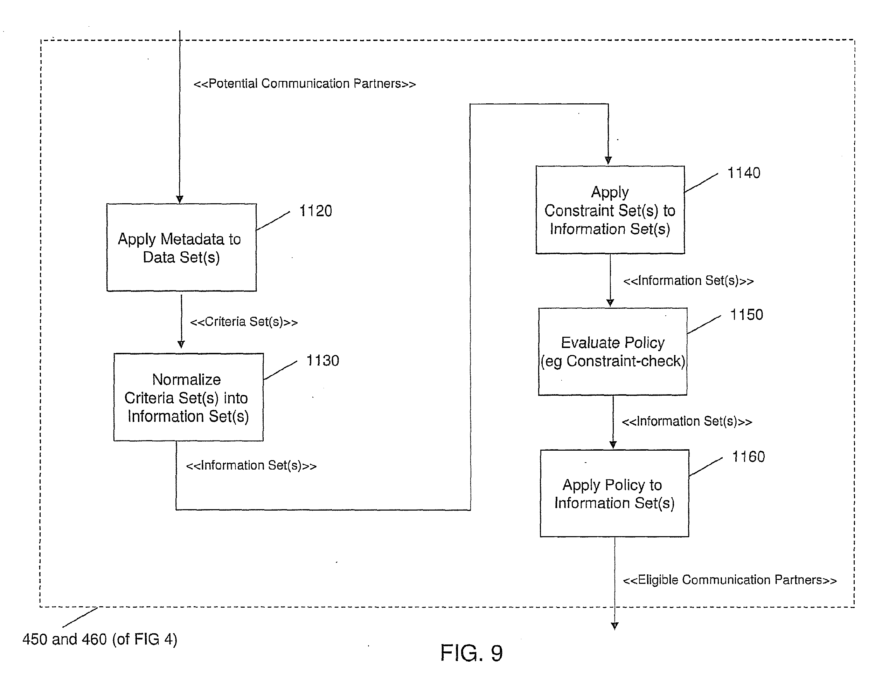

Data sets represent a series of user account entries of a pool of potentially eligible communication partners, or 'potential communication partners'. In operation, entity discovery engine 300 identifies certain communication partners from the data sets as eligible communication partners using various inputs applied in one or more predetermined configurations. Entity discovery engine 300 identifies eligible communication partners from data sets of potential communication partners. A potential communication partner is a communication partner that exists, but which has not been identified as an eligible communication partner. A potential communication partner becomes identified as an eligible communication partner through the application of inputs by entity discovery engine 300. Two example processes of a potential communication partner being identified as an eligible communication partner are provided below in reference to FIG. 4 and FIG. 9.

Each type of input used for identifying eligible communication partners will now be described, within the context of the example request for suggestions from mobile device 120 discussed above. Entity discovery engine 300 uses inputs in accordance with the processes described below in relation to FIG.s 4 and 9, to identify and suggest eligible communication partners from a base set of potential communication partners in a sensitive, contextual and secure manner.

A first input used by entity discovery engine 300 is information about existing users of social network systems, including data sets of user account entries, relationship information, social graphs, update information and metadata. The existing users of social network systems are, in one example, considered potential communication partners. User information is analogous to the information described above in relation to FIG. 2 and includes, for example, a subset of the information shown in FIG. 2. In one example, multiple listings of user information from multiple instances of social network system 100 is used. In another example, the multiple listings are normalized into a common or compact format so that entity discovery engine 300 can compare and contrast user account information from multiple social network systems that provide user account information in a nonhomogeneous form, such as, for example, a first data set of user account entries formatted according to a first schema and a second data set of user account entries formatted according to a second schema. In one example, normalization comprises removing spurious information from data sets that is not relevant to a current suggestion process. In another example, normalization occurs multiple times or as needed, as discussed below. Information about existing users of social network system 100 may be referred to as a data set of potential communication partners, or simply a data set.

Data sets of potential communication partners form the basis from which entity discovery engine 300 determines eligible communication partners. A data set of potential communication partners may undergo numerous applications of inputs before any entries of the data set are finally identified as eligible communication partners. If a particular user account does not appear in any of the data sets known to entity discovery engine 300, that particular user account cannot be suggested as an eligible communication partner. If a particular user account does appear in a data set known to entity discovery engine 300, that particular user account may be identified as an eligible communication partner and suggested as such. In one example, a particular user account is only identified as an eligible communication partner if that account meets each of a number of inputs, as discussed below.

Within the context of the example wherein entity discovery engine 300 receives a request for suggestions from mobile device 120, as discussed above, entity discovery engine 300 already has one or more data sets, or needs to acquire one or more data sets, or both, when the entity discovery engine 300receives the request for suggestions. In a first example, entity discovery engine 300 has, has access to, or requests and receives a data set comprising all user accounts of social network system 100. In another example, entity discovery engine 300 has, has access to, or requests and receives a data set comprising only select user accounts of social network system 100, wherein the select user accounts include only the user accounts that meet certain requirements or characteristics.

In one example, data sets of potential communication partners are provided to entity discovery engine 300 from social network system 100 through requests and responses for data sets. In another example, data sets are provided as an input together with a request for suggestions of eligible communication partners.

A second input used by entity discovery engine 300 in identifying eligible communication partners from a data set of potential communication partners is entity relationship metadata. Entity relationship metadata includes a criterion or criteria, selection statements, graphs (for example, a directed social graph) and executable program code (for example, Java source code to be executed by a Java based virtual machine). Criteria include one or more constraints and are used by, for example, selection statements to restrict entries from the data set for inclusion in the criteria set. Selection statements include query language statements, such as Xpath, Xquery, OQL and SQL, and the like, and are executed to identify specific entries from the one or more data sets for including in the one or more criteria sets. Graphs are overlaid or applied to the one or more data sets to refine the entries included in the one or more criteria sets. Program code navigates through the one or more data sets using, for example, a direct or indirect data access library, to produce one or more criteria sets from the entries of the data sets. In one embodiment the application of metadata to the one or more data sets during a normalization process greatly reduces the volume of data associated with potential communication partners, thereby easing and reducing the computational processing requirements of subsequent input applications.

A criterion refers to one or more characteristics of the entry, or a constraint set applied to entries. For example, a criterion may specify that for a potential communication partner to remain in consideration for being an eligible communication partner, they must currently be in New York. As another example, a criterion may specify that for a potential communication partner to remain in consideration for being an eligible communication partner, they must currently be within a 100 foot proximity of a particular location, such as the current location of mobile device 120. Individual criterion may be combined to create criteria which must all be met by entity relationship metadata associated with a potential communication partner for the potential communication partner to remain eligible for identification as an eligible communication partner. In one example, entity relationship metadata is used to verify the validity of the criterion or criteria to be applied during the suggestion process. For example, entity discovery engine 300 uses entity relationship metadata associated with data set 210 of FIG. 2 to verify that a request for suggestions based on the current city of a user aligns, and is compared with, Current Location 226 of FIG. 2.

In one example, entity relationship metadata includes data selection statements and expressions using a query language, such as Xpath, Xquery, OQL or SQL, which are applied or executed to the data set to reduce the entries of the data set, or to create or generate the data set. In another embodiment, a social graph which describes connections between users of social network system 100 is used to refine the entries of a data set. In yet another example, program code executes to navigate through multiple data sets and multiple instances of social network system 100 to generate a criteria set of entries from the data set.

Within the context of the example wherein entity discovery engine 300 receives a request for suggestions from mobile device 120, as discussed above, in a first example, entity discovery engine 300 uses entity relationship metadata to request from social network system 100 a data set that includes only information about user accounts that match a criterion or criteria, such as user location. In this example, entity discovery engine 300 receives a data set of potential communication partners from social network system 100. In another example , entity discovery engine 300 applies entity relationship metadata to user information that the entity discovery engine 300 already has in data store 302, or that the entity discovery engine 300 requests and receives. In both examples, entity discovery engine 300 identifies entries from a data set of potential communication partners that are to continue being considered potential communication partners, according to the entries' adherence with the entity relationship metadata. In some embodiments, the process of identifying includes multiple or subsequent applications of the entity relationship metadata to a data set, or multiple requests for data sets based on the entity relationship metadata, for example, in sequence, to reduce or refine the number of entries from the data set.

A third input used by entity discovery engine 300 to identify eligible communication partners includes information about policies. A policy applies broadly to limit categories of user accounts that are considered in the identification of eligible communication partners. Policies can be one or more of a user policy, an enterprise policy, a service policy, a network provider policy and a jurisdictional policy.

A user policy is established by a user and applies to all communication partner discovery for that user. In one example, a user policy is established by a user using a setup tool, an account creation application or an account management tool. For example, a user policy restricts employees from a particular company from being suggested to a user as an eligible communication partner, because, for example, that user is a former employee who left the company under difficult circumstances.

An enterprise policy is established by an enterprise for all users of social network system 100 who are members of the enterprise. In one example, an enterprise policy applies to all employees of a company and is enforced, for example, by an IT department of the enterprise. An enterprise policy enforces common standards for all members of the enterprise. For example, an enterprise policy restricts employees of a company from receiving suggestions of eligible communication partners that are employees of another, possibly competing, company.

A service policy is established by a service provider for all users of a particular service, possibly in association with social network system 100. A service policy enforces common standards on all users of the service. For example, a service policy restricts all users of a voice communications service from being suggested as eligible communication partners to users who do not subscribe to the voice communication service.

A network provider policy is established by a network provider for all users of a particular network. A network provider policy enforces common standards on all users of the network. For example, a network service provider policy restricts all users of a particular network from being suggested as eligible communication partners to users of another network.

A jurisdictional policy is established by a jurisdictional authority (such as a government) and applies to all users within the authority of the jurisdictional authority. For example, a jurisdictional policy may restrict all of a government's subjects who are older than 30 years of age from being suggested as eligible communication partners with subjects who are younger than 18 years of age, and vice versa.

In one example, entity discovery engine 300 provides functionality for a user, enterprise, service, network provider or jurisdictional authority to input policies. Input functionality includes applications accessible by any of these parties to enter policy information. In another example, entity discovery engine 300 is programmed with a basic set of policies which can be altered, added to, supplemented, deleted and the like by an administrator of entity discovery engine 300. In yet another example, entity discovery engine 300 requests policies from policy sources, such as a jurisdictional policy authority or an enterprise policy provider, as needed, on receipt of a request for suggestions, or periodically for pre-processing and later use.

Within the context of the example wherein entity discovery engine 300 receives a request for suggestions from mobile device 120, as discussed above, entity discovery engine 300 uses one or more policies to identify eligible communication partners. In one example, entity discovery engine 300 uses policy to remove a potential communication partner from a data set of potential communication partners if the potential communication partner does not meet the policy. For example, an enterprise policy may be applied to filter from a data set of potential communication partners all potential communication partners who do not work for a particular company. Policies may be applied in isolation, in a layered manner, in sequence, hierarchically (e.g., user policy, then enterprise policy, then service provider policy, etc.) or additively to identify communication partners that meet all of the requirements specified by the policy or policies. In one example, multiple policies are applied to identify eligible communication partners. In another example, select ones of a set of policies are applied to identify eligible communication partners, wherein the applied policies are selected depending on the context in which suggestions are being made. In yet another example, one or more policies establish the information that is shared during the process of suggesting eligible communication partners.

A fourth input used by entity discovery engine 300 to identify eligible communication partners includes information about rules and constraints. In one example, rules and constraints are algebraic or logical expressions, or a language construct. In another example, rules and constraints comprise declarative language, such as Object Constraint Language (OCL) expressions used in the process of evaluating the eligibility of communication partners from a set of potential communication partners. Declarative language rules include, for example, a context that defines under which circumstances the rule is to apply, a property that represents a characteristic of the context, an operation and one or more keywords. In one example, entity discovery engine requests rules and constraints on receipt of a request for suggestions. In another example, entity discovery engine 300 maintains and stores in data store 302 a set of rules and constraints to be applied as needed.

Within the context of the example wherein entity discovery engine 300 receives a request for suggestions from mobile device 120, as discussed above, in one example, entity discovery engine 300 uses one or more rules and constraints to evaluate the eligibility of communication partners from a data set of potential communication partners. For example, a rule is used by entity discovery engine 300 to make a potential communication partner ineligible where the request for suggestions originates from a male user aged 30 years of age or older and the potential communication partner is a female user aged 18 years of age or younger. The rule applies only within this contextual situation and serves to restrict the ability of older males to become friends with young females.

A fifth input used by entity discovery engine 300 to identify eligible communication partners includes update information about users of social network system 100. Update information comprises new or updated information about one or more users of social network system 100. Update information may include, for example, an updated employer, an updated friend list, an updated status, or any other update that may occur for a user of social network system 100. In one example, entity discovery engine 300 receives or subscribes to receive update information about all users of social network system 100 as updates happen, or in periodic bulk updates. In another example, entity discovery engine 300 requests update information on receipt of a request for suggested communication partners, or once a potential communication partner has been identified as an eligible communication partner.

Within the context of the example wherein entity discovery engine 300 receives a request for suggestions from mobile device 120, as discussed above, entity discovery engine 300 uses update information to ensure that its information about existing users of social network system 100 is up to date and also to provide updated listings of suggested eligible communication partners. In one example, entity discovery engine 300 provides a revised suggested eligible communication partner listing on receipt of update information. For example, if a user has recently requested eligible communication partners based on other users who are currently located in the same city, entity discovery engine 300 may, after having provided an initial suggestion of eligible communication partners, provide an updated listing of eligible communication partners if, for example, update information is received that indicates that one of the suggested eligible communication partners has left the city, or if another user has recently arrived in the city and has thus become an eligible communication partner.

In one example, a requester for suggestions of eligible communication partners, such as a user of mobile device 120, for example, is provided visibility into the inputs applied by entity discovery engine 300 for processing a request for suggestions. Visibility provides transparency to the requestor and allows the requestor to know the parameters and criteria used to generate and identify eligible communication partners. Transparency provides the requestor with assurance of how communication partners are qualified and identified as eligible communication partners. In one example, entity discovery engine 300 provides details of the inputs applied in order for a representation of the inputs to be displayed to the requestor on a display of mobile device 120, for example. Furthermore, the requestor, in one example, is able to tweak one or more of the inputs used by entity discovery engine 300 in order to receive different suggestions of eligible communication partners, and to confirm or verify expected suggestions with received suggestions. In one example, the display of inputs is done prior to the suggestion of eligible communication partners by entity discovery engine 300. In another example, a summary of the inputs applied by entity discovery engine 300 is provided along with the suggested eligible communication partners.

In operation, entity discovery engine 300 applies inputs to a data set of potential communication partners to identify eligible as well as ineligible communication partners from the data set of potential communication partners. The inputs applied vary based on the configuration of entity engine discovery engine 300. Entity discovery engine 300 applies inputs in execution of a suggestion process for identifying and suggesting eligible communication partners. Two example suggestion processes are now discussed below.

Entity discovery engine 300 enables communication partnerships between social network communication entities. Entity discovery engine 300 uses inputs to identify eligible communication partners from one or more data sets of potential communication partners. A process executed at entity discovery engine 300 uses a variety of different inputs, applied in order, to identify and suggest eligible communication partners.

Turning now to FIG. 4 there is shown a process diagram of a first example eligible communication partner suggestion process. The eligible communication partner suggestion process of FIG. 4 is executed, for example, by entity discovery engine 300 (of FIG. 3).

The eligible communication partner suggestion process of FIG. 4 begins with the initiation of a suggestion process, at 400. The suggestion process is initiated by, for example, the receipt of a request for suggestions, or subscription for suggestions, by entity discovery engine 300. The suggestion process is alternatively initiated periodically, in the absence of a specific request for suggestions, such as according to a schedule, a timer, on receipt of an update message, or any other trigger to initiate a suggestion process.

Once a suggestion process has been initiated, entity discovery engine 300 determines, at 410, whether one or more data sets of potential communication partners is required, or if data sets currently available to entity discovery engine 300 are sufficient for handling the request and are up to date. A data set is required if a request for suggestions did not include an appropriate data set, if entity discovery engine 300 does not have a data set of potential communication partners, if an existing data set of potential communication partners is stale, if an existing data set (or associated metadata) refers to another data set or contains a logical expression to fetch information from another data set or information source, or if additional data sets of potential communication partners are required by the suggestion process. In one example, one or more additional data sets are not required on receipt of a request for suggestions from mobile device 120 because entity discovery engine 300 maintains up to date information using, for example, update messages, continuous polling, RESTful polling and the like. In one example, a data set is a listing of potential communication partner user account entries.

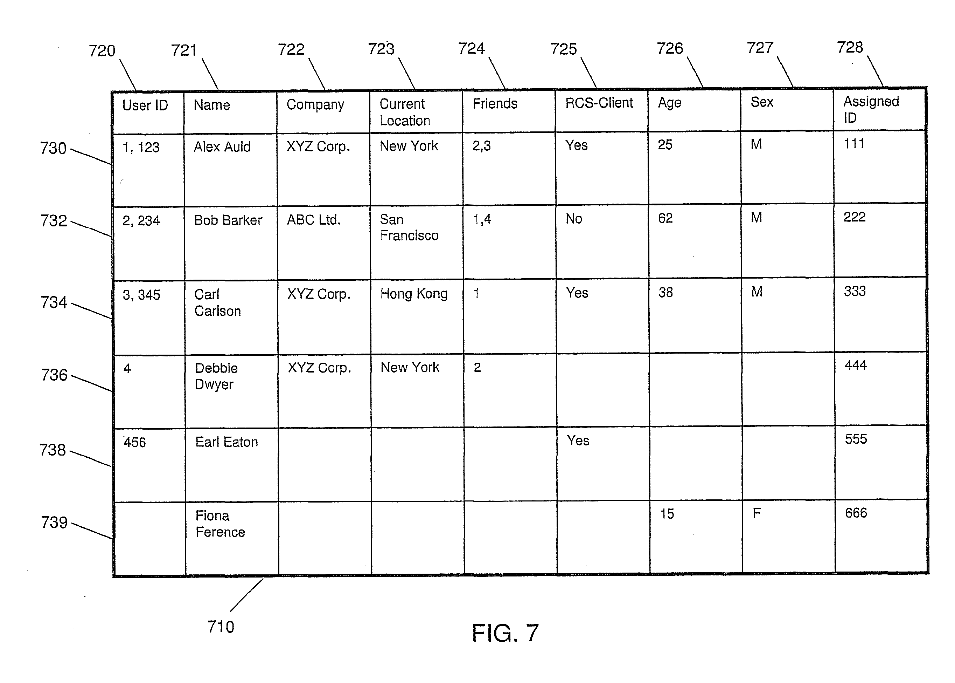

If a new or updated data set is required, the suggestion process proceeds to 420 where one or more new or updated data sets are requested and received. Data sets are requested and received in accordance with the operation of the networked communication system described in FIG. 3. In one example, multiple requests, or subscriptions, for data sets are made to one or more social network system 100 or other services, such as an identity platform or presence system. In one example, where a request for suggestions is received from mobile device 120, requests for data sets are made to mobile device 120 using, for example, a RESTful long-poll operation, an asynchronous request and the like. In another example, multiple data sets are normalized into a common format for consistency, for ease of comparison, for reliable evaluation and to amalgamate information from multiple sources into a unified record. In one example, normalization includes identifying common attributes among disparate data sets and aligning information from the disparate data sets along the common attributes and is described below with reference to FIG. 7 and FIG. 9. In another example, normalization includes removing, filtering or otherwise excluding spurious or irrelevant information from data sets. For example, returning to FIG. 2, if suggestions are unrelated to employment, normalization removes Company 224 information from the data set under consideration.

Whether entity discovery engine 300 requires a new or updated data set, or already has a data set, a data set is provided pursuant to either 410 and 420, and the suggestion process progresses to 430 where entity discovery engine 300 determines whether new, additional or updated inputs are required for the operation of the suggestion process, or if the inputs available to entity discovery engine 300 are sufficient and up to date.

If one or more new, additional or updated input is required, the suggestion process proceeds to 440 where entity discovery engine 300 requests, fetches, evaluates or subscribes for, and receives one or more inputs. Inputs are requested and received in accordance with the network communication systems described above. In one example, entity discovery engine 300 requests, fetches, evaluates or subscribes for, one or more inputs from one or more social network systems 100, or from other sources of inputs, such as a policy server, an identity platform or a presence service.

In another example, entity discovery engine 300 is only provided the minimum amount of information required for the suggestion process. For example, if a user account entry's company is not relevant to the suggestion process, social network system 100, or any other source of information, does not provide company information to entity discovery engine 300 when providing inputs. In one example, the relevance of information to the suggestion process is communicated from entity discovery engine 300 to the information source as part of a request for inputs.

Whether entity discovery engine 300 requires new, additional or updated inputs, or entity discovery engine 300 already has sufficient inputs, inputs are provided at entity discovery engine 300 pursuant to either 430 and 440, and the suggestion process proceeds to 450 where entity discovery engine 300 applies inputs to data sets to identify eligible communication partner entries from the data set of potential communication partners.

Entity discovery engine 300 uses inputs to evaluate and assess the eligibility of potential communication partners. A potential communication partner must meet or correspond to inputs before being considered an eligible communication that can be suggested as such.

In one example, the application of inputs to data sets begins under the assumption that no entries from the data set are eligible unless certain inputs apply to the entry. In this example, entries from the data set are considered ineligible unless they correspond to applicable inputs.

In another example, the application of inputs to data sets begins under the assumption that all entries from the data sets are eligible unless certain inputs apply. In this example, entries from the data set are considered eligible unless they correspond to applicable inputs.

In yet another example, the application of inputs begins under the neutral assumption that all entries from the data sets are neither eligible or ineligible, and the entries may be removed from the data set for being ineligible, or may be added to a result set for being eligible.

In one example, entity discovery engine 300 applies inputs sequentially. In this example, the suggestion process proceeds to 460 after applying an input and determines whether there is another input to be applied to the data set. If another input needs to be applied, the suggestion process returns to 450 to apply the additional input. Further detail of one example of the operation of 450 and 460 is provided below in relation to FIG. 9. When all inputs have been applied, the suggestion process proceeds to 470.

In another example, entity discovery engine 300 assesses and combines multiple inputs into a single input pattern. A single input pattern is applied once and results in the same result as applying each input sequentially. For example, a single input pattern is the result of the union of multiple inputs, using, for example, logical operations on the inputs. In this example, inputs may be normalized into a common format in order to create a single input pattern. In one example a single input pattern applies to all suggestion process execution by entity discovery engine 300 and in another example, a different (or new) input pattern is used per execution of the suggestion process.

At 470, the suggestion process uses the results of the application of inputs of 450 to create, modify, update or generate a result set. A result set includes information from the data set that identifies eligible communication partners. The result set only includes information about the communication partners of the data set that conformed to the inputs. In one example, the result set is a list of communication partner information, such as, the user account entry list of FIG. 2. In another example the result set is a social graph, an array of identifiers, or any other appropriate representation of eligible communication partners. In yet another example, the result set is a mutable listing which is discussed below.

In one example, a result set only includes minimum information about each eligible communication partner user account entry, such as, for example, only the information that is needed to form a communication partnership or only information about name, gender and age. In one example, entity discovery engine 300 removes, discards or otherwise excludes from a result set information that is not relevant to the current suggestion process. For example, entity discovery engine 300 includes in a result set only the information required to form a communication relationship and discards information about the company of each user account entry in the result set. As another example, entity discovery engine 300 includes only the information required to form a particular type of communication relationship, such as phone number information, and information for other types of communication is not provided. In another example, a result set does not comprise irrelevant information because entity discovery engine 300 is not aware of any irrelevant information because information sources did not provide any such irrelevant information, as discussed above.

At 480, the suggestion process uses the result set to suggest eligible communication partners. In one example, suggesting eligible communication partners includes sending a message with a representation of the result set to a requester of suggestions, such as mobile device 120. In another example, suggesting eligible communication partners includes broadcasting the result set to subscribed users, storing the result set for later use, sending updates that reflect changes to the eligible communication partner list from a previous execution of the suggestion process, or any other suitable mechanism for disseminating the information of the result set.

In yet another example, the suggesting eligible communication partners of 480 includes storing a static or mutable listing of the eligible communication partners in data store 102 and sending a reference to the listing, or another identifier of the stored listing, to mobile device 120 instead of sending the listing. Using the reference or other identifier, mobile device 120 requests one or more suggested eligible communication partners from the stored list or requests updates or further information about the listing or specific entries of the listing. The stored listing is maintained current by entity discovery engine 300. Entity discovery engine 300 continuously updates the information stored in the listing to ensure that the listing of eligible communication partners is up to date. A user of mobile device 120 is able to send a message, or other information, to all currently listed members of the stored listing using the reference and without a need to know all of the current members of the listing, the structure of the stored listing or any other details of the stored listing.

In yet even another example, entity discovery engine 300 sorts and divides the suggested eligible communication partners into subgroups based on a characteristic or other reason, and assigns a label or other identifier to each subgroup and provides the labels or other identifiers to mobile device 120. Using the labels or other identifiers, mobile device 120 presents the subgroups of eligible communication partners to a user in an organised manner and allows the user to access particular subgroup lists from entity discovery engine 300 individually, or to access particular eligible communication partners from a subgroup individually. Entity discovery engine 300 maintains and updates the eligible communication partners of each of the subgroups as necessary, for example, upon the occurrence of an update message. In one example, maintaining and updating includes entity discovery engine 300 sending updated information to mobile device 120. In another example, maintaining and updating involves only entity discovery engine 300 updating its stored eligible communication partner information. Furthermore, a user of mobile device 120 is able to communicate with all eligible communication partners of a subgroup using the label or other identifier, and entity discovery engine 300 coordinates delivery of the communication to the current members of the subgroup identified by the label or other identifier.

In one example, suggesting eligible communication partners ensures that information about ineligible communication partners is not shared. In another example, information about ineligible communication partners is shared to enable validation, testing or configuration of entity discovery engine 300.

The example eligible communication partner suggestion process of FIG. 4 is one example of a method of suggesting eligible communication partners. It is to be understood that alternative arrangements, configurations and orders of the steps described in FIG. 4 can be used to achieve eligible communication partner suggesting and are within the scope of the technology described herein. For example, requesting and receiving data sets at 410 and requesting and receiving inputs at 430 may occur multiple times, and may occur in different order, at the same time, or as needed to apply an input to a data set at 450.

The example suggestion process described in FIG. 4 may be understood with reference to a specific example of the execution of the process.

For example, entity discovery engine 300 receives a request for eligible communication partner suggestions from Alex's mobile device 120 which initiates the suggestion process. The request is a simple request for suggestions and does not include a data set or other inputs. To respond to the request for suggestions, entity discovery engine 300 determines that a data set is needed.

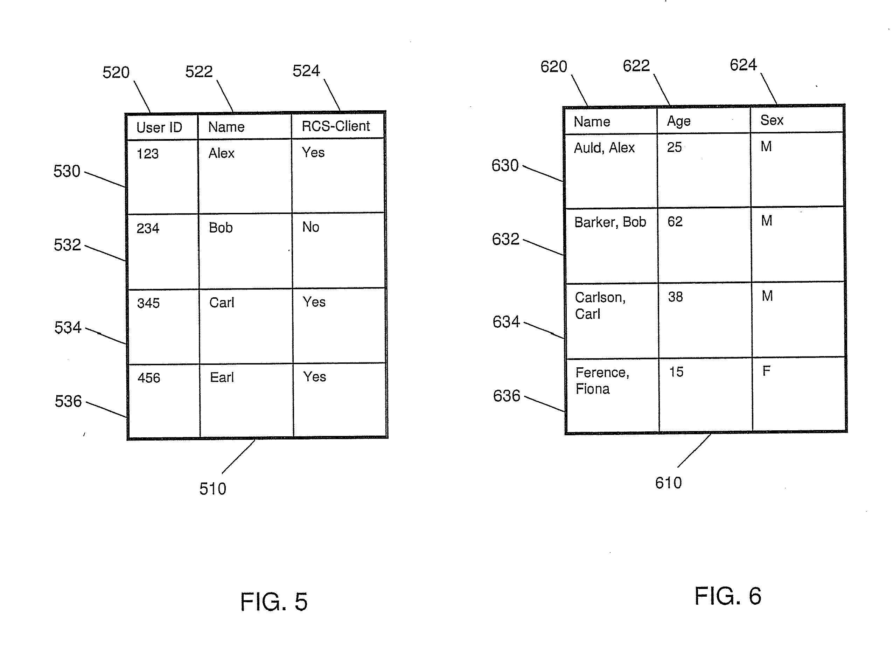

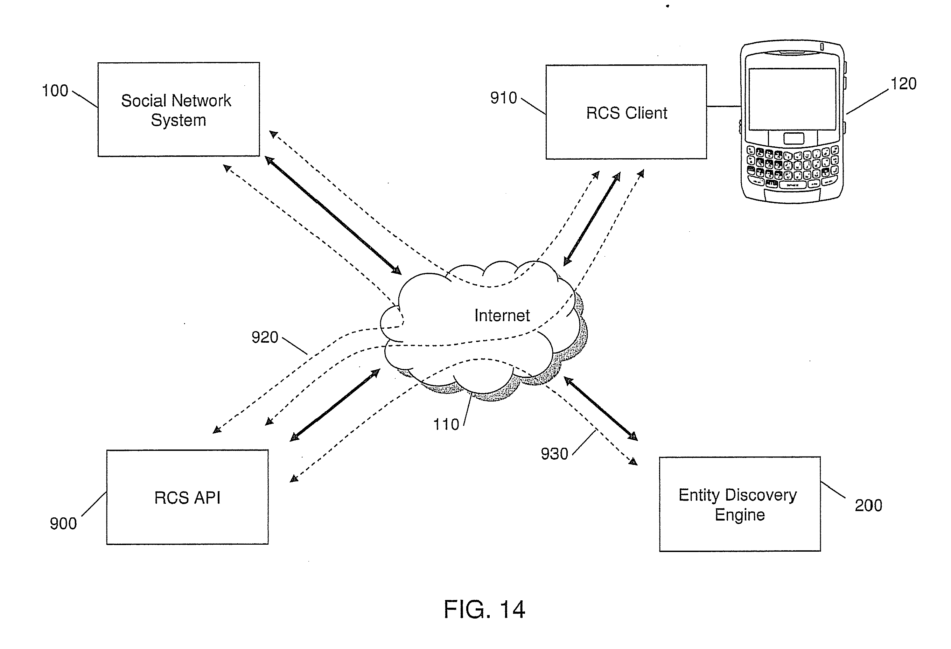

Entity discovery engine 300 requests a data set from social network system 100 and receives the data set shown in FIG. 2 in response. Entity discovery engine 300 requests a second data set from an RCS system (described below in relation to FIG. 14) and receives the data set shown in FIG. 5. Entity discovery engine 300 requests a third data set from an enterprise server (such as a corporate mail server or other enterprise information source) and receives the data set shown in FIG. 6. The received data sets include information about potential communication partners and, as shown in FIG.s 2, 5 and 6, include different information parameters.

In order to process the three received data sets, entity discovery engine 300 normalizes the data sets to a common format, as shown in FIG. 7. The normalized data set shown in FIG. 7 is generated by entity discovery engine 300 matching common information to amalgamate the disparate data sets into a common format. In one example, matching involves identifying commonalities across data sets, such as common names, locations and ages, for example. In another example, normalizing involves changing the structure of the information, such as changing tabular data into graph data, for example. As can be seen in FIG. 7, where information, such as Earl's company or Fiona's friends, are unknown, the information is left blank. In one example, entity discovery engine 300 requests additional data sets to complement missing information. In another example, entity discovery engine 300 assigns a unique identifier 728 to each entry to permit sorting and tracking during the process of identifying eligible communication partners.

With normalized data sets (as shown in FIG. 7), entity discovery engine 300 proceeds to determine whether inputs are required. In this example, entity discovery engine 300 determines that additional inputs are required to assess the eligibility of potential communication partners for continued consideration as an eligible communication partner. Entity discovery engine 300 requests inputs from, for example, an RCS system (as described below in FIG. 14), mobile device 120 and a jurisdictional policy server (not shown). In response to the requests, entity discovery engine 300 receives a) entity relationship metadata from mobile device 120 indicating that suggested communication partners must be in North America; b) an update message from the RCS system (to supplement current information) indicating that Earl is in Detroit, that his last name is Eaton, that he is 35 years old and that he is a male; and c) a policy indicating that people in the United States must have a verifiable age and any people in the United States who are male and are older than 30 years of age are not able to receive suggestions that females who are younger than 18 years of age are eligible communication partners.

Using these three inputs, entity discovery engine 300 identifies eligible communication partners from the data set of potential communication partners of FIG. 7. In one example, entity discovery engine 300 applies each of the three inputs sequentially to identify eligible communication partners.

Applying the first input (i.e., the entity relationship metadata indicating that suggested communication partners be in North America) results in Carl being removed from the list of potential communication partners because the information in the normalized data set of FIG. 7 indicates that he is in Hong Kong. In one example, Fiona is also removed from the potential communication partner data set because her location is unknown. In another example, Fiona's unknown location does not result in her exclusion as an eligible communication partner.

Applying the second input (i.e., the update message about Earl's age, location, name and gender) results in an update to the normalized data set of FIG. 7 to reflect the additional information about Earl.

Applying the third input (i.e., the policy requiring verifiable age and ensuring that older males do not communicate with younger females) results in Debbie and Fiona being removed as a potential communication partners because they are both females and because Debbie's age is unknown and because Fiona is younger than 18 years of age.

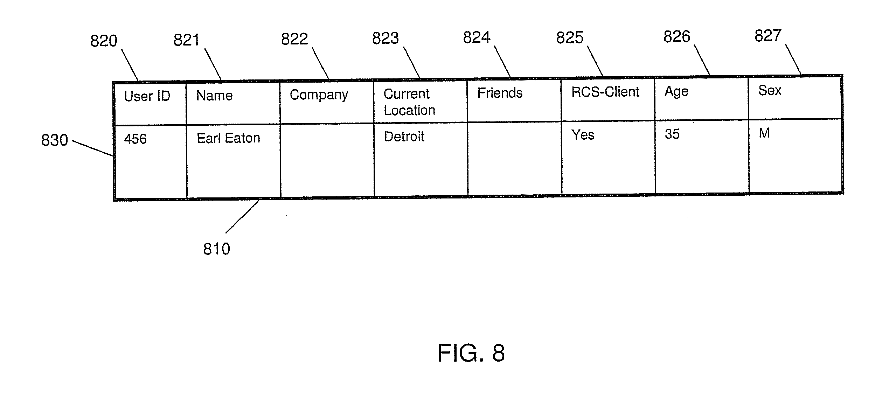

After identifying eligible communication partners through the application of the three exemplary inputs, entity discovery engine 300 generates a result set that includes Earl and Bob. In one example, Bob is removed from the result set through the additional application of an input, a constraint, or of a consistency check, that determines that Bob and Alex are already communication partners. The result set of identified eligible communication partners includes the information shown in FIG. 8. A representation of this information is returned to Alex, via mobile device 120, in a response message. On receipt of the response message, Alex is able to become friends with Earl using the suggestion information provided by entity discovery engine 300 in the response message and social network client application 125 of FIG. 1. Becoming friends allows Alex and Earl to communicate according to the social network communications described above in relation to FIG. 1.

In an alternative example, entity discovery engine 300 applies semantic analysis, or requests additional information, in order to complete the data set shown in FIG. 7, where the information is pertinent for identifying eligible communication partners. For example, entity discovery 300 requests, either directly or indirectly, information about Debbie's age and gender. A direct request comprises asking Debbie for her age and gender, possibly via social network system 100. An indirect request comprises requesting that another service, such as an identity service (not shown) ascertain or provide Debbie's age and gender. Alternatively, entity discovery engine 300 deduces from Debbie's information, including, for example, her name or other information (such as pictures of Debbie, or references to Debbie's gender in postings contained in her user account entry at social network system 100), that Debbie is a female. In one example, a trusted source, such as, for example, a locked user profile or a trusted identity platform, is queried to ascertain Debbie's verified information, such as her verified age.

Turning now to FIG. 9, there is shown a diagram of a second example eligible communication partner suggestion process. The process shown in FIG. 9 corresponds to elements 450 and 460 of FIG. 4 and provides a detailed example of one process of applying inputs to identify eligible communication partners.

The process shown in FIG. 9 executes after one or more data sets of potential communication partners have been provided and after one or more inputs have been provided. The one or more data sets and one or more inputs are used by entity discovery engine 300 to identify and suggest eligible communication partners.

At 1120, the number of user account entries in the one or more data sets is reduced using entity relationship metadata. The output of 1120 is one or more criteria sets which include a reduced set of user account entries from the one or more data sets. In one example, 1120 applies entity relationship metadata to reduce the number of user account entry rows from a data set of user account entry rows.

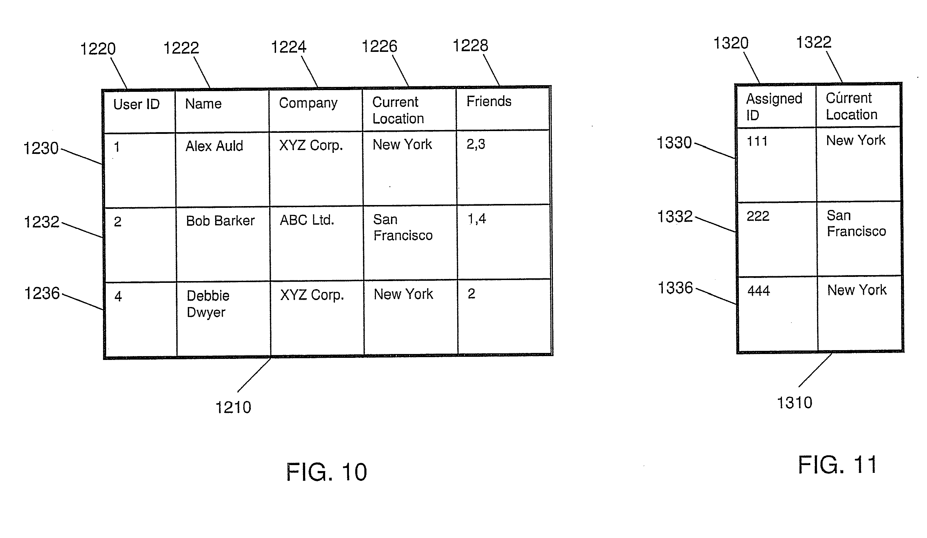

In one example, entity relationship metadata is a criteria which indicates that potential communication partners must be located in North America. Applying this entity relationship metadata to, for example, the data set of FIG. 2 results in the criteria set shown in FIG. 10. FIG. 10 does not include Carl Carlson, since he is not a potential communication partner by virtue of his location being in Hong Kong.

Following the creation of one or more criteria sets in 1120, the process proceeds to 1130 where the one or more criteria sets are normalized into one or more information sets. An information set is a compact version of a criteria set that does not include spurious information that is not relevant to the eligible communication partner suggestion process. In one example, 1130 normalizes criteria sets to remove columns of unnecessary information from a criteria set of user account entries. In another example, to ensure that entity discovery engine 300 is able to correlate information among different criteria sets, a relational information set, for example, is created or modified using one or more existing data sets. A relational information set cross-references identifiers across each information set and includes, for example, a unique identifier from each information set along with an assigned identifier, such as a foreign key, to enable cross referencing among information sets.

In another example, normalization at 1130 includes identifying a common identifier across criteria sets and including this, or another, common identifier in each of the normalized information sets to ease cross-reference or data joining among information sets. In one example, logical inputs (such as entity relationship metadata and predicates or logic defined using Resource Description Framework (RDF) or RDF Schema (RDFS) for example) are used or evaluated to inspect and normalize the information sets. For example, a user name may be common across two criteria sets, and a user social security number may be common across one of the two criteria sets and a third criteria set. The three criteria sets may be normalized into one or more information sets by linking these commonalities across the three criteria sets. In one example, a single information set is created to include the information of each of the three criteria sets based on the commonalities. In another example, three information sets are created using an assigned unique identifier or constructed foreign key so that a single entry may be uniquely referenced across information sets.

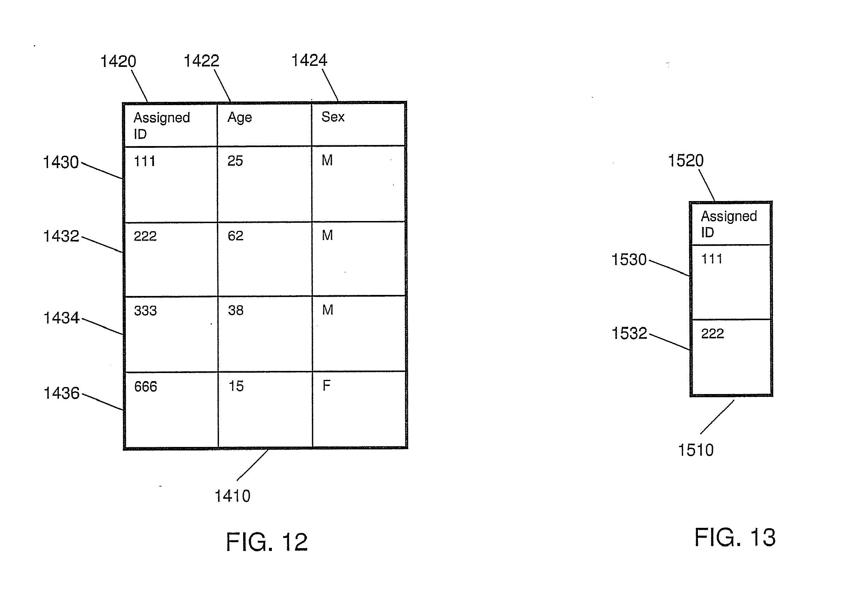

In yet another example, normalization at 1130 includes executable program code examining metadata, or through native introspection, to establish a means for combining or folding information sets under consideration. In one example, a first information set is defined as XML, and an input includes a Java Architecture for XML Binding (JAXB) binding file. In this example, the executable program code executes to map or determine that, for example, an identifier attribute of an element of the XML information set matches or corresponds to, for example, Assigned ID column 1320 of FIG. 11. Matching is accomplished using the JAXB binding file to identify corresponding information elements from disparate sets of information, as is well known. Matching information from the XML formatted first information set permits associated information to be pulled from the XML formatted first information set and normalized into a common format with an assigned identifier or foreign key, for example, such as those information sets shown in FIG. 11 and FIG. 12.

In one example, normalization in 1130 removes spurious information which is not related to the location of a potential communication partner. Applying this normalization to the information shown in FIG. 10 results in the reduced information shown in FIG. 11. The information included in FIG. 11 is small and permits rapid and efficient processing of large data sets by eliminating information that is not required for subsequent evaluation, such as, for example, company information from a user account entry where no input relates to company information.

In another example, normalization at 1130 identifies and links entries across multiple information sets, using, for example common names or attributes. Normalization of the information shown in FIG. 6 with the information of FIG. 7 results in the information set shown in FIG. 12. FIG. 12 shows the result of a normalization process which has identified a commonality of names (for example, Bob Barker and Barker, Bob) between the information shown in FIG. 6 and FIG. 7 and has replaced the names of FIG. 6 with the corresponding Assigned ID 728 of FIG. 7 (i.e. Assigned ID=222) to permit cross referencing or data joins between the information sets of FIG. 11 and FIG. 12.

Following the creation of one or more information sets at 1130, the process proceeds to 1140 where constraint sets are applied to the one or more information sets to produce one or more further information sets. Constraint sets include the logical combination of the one or more information sets using, for example, Boolean or algebraic logic. In one example, for an entry to remain in consideration as a potential communication partner, the entry has a corresponding entry in each information set. In another embodiment, for an entry to remain in consideration as a potential communication partner, the entry has a corresponding entry in one or more information sets while not having a corresponding entry in one or more other information sets.

In an example, the constraint set applied at 1140 eliminates from consideration as a potential communication partner any entry which does not have a corresponding entry in both of the information sets of FIG. 11 and FIG. 12. The application of this constraint set results in the further information set shown in FIG. 13. The information set shown in FIG. 13 includes only assigned identifiers and is usable by entity discovery engine 300 to correlate with associated information from other information sets using a relational data set or foreign key, as described above.

Following the application of constraint sets to information sets at 1140, the process proceeds to 1150 where policy information is evaluated to ensure consistency among each of the policies used in the eligible communication partner suggestion process. In one example, ensuring consistency comprises verifying that potentially inconsistent policies are not used, or are modified appropriately to mitigate or remove the inconsistency. In another example, ensuring consistency comprises validating or authenticating the sources of policy information or identifying reputable information sources for requesting further information about potential communication partners and requesting and receiving further information about the potential communication partners. In another example, all policies are combined into a single policy, or flattened into a composite policy, that reflects the constraints of each individual policy.

In one example, at 1150, entity discovery engine 300 identifies each of the policies that are to be applied during the eligible communication partner process. Each identified policy is examined or evaluated and inconsistencies or conflicts are identified and resolved if possible.

In an example of the operation of 1150, a first policy stipulates that male users over the age of 30 are not eligible to become communication partners with female users under the age of 18. A second policy stipulates that male users over the age of 30 are not eligible to become communication partners with female users under the age of 16. The first policy and the second policy are inconsistent because the first specifies an 18 year age limit for females and the second specifies a 16 year age limit. In one example, entity discovery engine 300 resolves the inconsistency through a restrictive resolution that evaluates the policies such that the more restrictive second policy is applied. In another example, entity discovery engine 300 resolves the inconsistency through a permissive resolution that evaluates policies such that the less restrictive first policy is applied. In yet another example, a resolution that is neither restrictive nor permissive is applied to achieve a hybrid result. In an even further example, entity discovery engine 300 notifies an administrator or other user or service of the inconsistency and requests input for resolution of which policy should be applied and whether policy is to be updated permanently to resolve the inconsistency.

In another example of the operation of 1150, the first policy described above is a jurisdictional policy and the second policy described above is a user policy. In this example, entity discovery engine 300 includes a hierarchy of policies which is used to resolve inconsistencies among policies. In one example, a jurisdictional policy supersedes a user policy and entity discovery engine 300 resolves the inconsistency by evaluating the policies such that the first, jurisdictional policy is applied, not the second, user policy. Other hierarchies of policy types are possible and are configurable.

In another example, at 1150, entity discovery engine 300 evaluates policies and determines that one of the policies is dependant on the age of a user, similar to the first and second policies discussed immediately above. These policies are dependant on legitimate information existing in the information sets being used by entity discovery engine 300 during the eligible communication partner suggestion process and may indicate that actual, verified information be used by entity discovery engine 300. In one example, entity discovery engine 300 determines whether at least one of the information sets includes age information from a reliable information source, such as an authorization platform (for example, Object Management Architecture (OMA) Policy Evaluation Enforcement Management), an RCS user registry (for example, via the Identity Management System (IMS) Call Session Control Function (IMS CSCF), an identity service (for example, Liberty Alliance or OpenID identity provider) or a locked user profile within a service provider or circle of trust, for example. If entity discovery engine 300 determines that none of the information sets is sourced from a reliable information source, entity discovery engine 300 requests reliable information from a reliable information source. The reliable information is used by entity discovery engine 300 in further steps of the eligible communication partner suggestion process to ensure accurate suggestions are made.

Following the evaluation of policy information at 1150, the process proceeds to 1160 where entity discovery engine 300 applies the evaluated policy or policies to the information sets. In applying a policy, entity discovery engine 300 disqualifies or otherwise removes a potential communication partner from consideration as being an eligible communication partner if the policy is not met. Policy application is made in accordance with the description of the application of inputs, as described above in relation to 450 of FIG. 4. Pursuant to an application of one or more policies, all potential communication partners (from the information set or sets under consideration) that meet or conform to the one or more policies are identified, by entity discovery engine 300, as eligible communication partners.

In one example, following 1160, the set of eligible communication partners is considered a result set, as in 470 of FIG. 4. The eligible communication partners are, in one example, suggested as eligible communication partners pursuant to, for example, 480 of FIG. 4.

Accordingly, the example eligible communication partner suggestion process shown in FIG. 9 reduces a large set of potential communication partners to a smaller subset of eligible communication partners. The example process comprises a) the application of metadata to a data set to produce a criteria set; b) the normalization of criteria sets into information sets; c) the application of constraint sets to information sets; d) the evaluation of one or more policies; and e) the application of the one or more evaluated policies to the information sets to generate or otherwise produce a resulting set of eligible communication partners. Eligible communication partners represent a communication partner that meets or otherwise complies with each of the inputs applied by entity discovery engine 300 during the eligible communication partner suggestion process.

Turning now to FIG. 14, there is shown an exemplary network communication system comprising a Rich Communication Suite (RCS) system. The example RCS system shown in FIG. 14 includes many of the components described above in relation to FIG. 3, which are numbered the same as in FIG. 3. The RCS system of FIG. 14 comprises RCS API 900 and RCS client 910. In one example, RCS API 900 is an RCS service.

RCS is a suite of IP Multimedia Subsystem (IMS) based communication services being developed by the GSM Association to increase interactivity between networks and subscribers on a multiplicity of different mobile device types, such as, for example, BLACKBERRY^{®} devices, GOOGLE ANDROID^{®} based devices, APPLE IOS^{®} based devices, laptops and the like. RCS is enabled by RCS API 900 and RCS Client 910. RCS API 900 exposes service interfaces that interact with RCS Client 910 executing at mobile device 120 to provide network communication services. RCS API 900 is, in one example, situated within network infrastructure and interconnects to a number of services, such as, for example, a location service, a presence service and an identity service (all not shown). RCS API 900 further connects with social network system 100, as shown by communication channel 920, and with entity discovery engine 300, as shown by communication channel 930.

RCS Clients, such as RCS Client 910, provide functionality to users through communication and interaction with RCS API 900. RCS Client 910 and RCS API 900 are closely related by RCS functions and communicate information between them at frequent intervals to provide functionality to, for example, initiate and provide services between mobile device 120 and another electronic device or service provider. In one example, eligible communication partner suggestions provided by entity discovery engine 300 are provided to RCS Client 910 via RCS API 900. In another example, RCS Client 910 requests eligible communication partner suggestions from RCS API 900, which in turn forwards and coordinates a response to the request for suggestions with entity discovery engine 300.

RCS Client 910 executes at mobile device 120 to provide rich communication functionality. Rich communication functionality includes presenting a user interface on a display of mobile device 120 and receiving inputs from input devices of mobile device 120. In one embodiment, RCS Client 910 provides a user interface through which a user of mobile device 120 can interact with social network system 100 and other services, such as a presence service and a location service, for example.

In one example, RCS API 900 provides inputs to entity discovery engine 300. RCS API 900 tracks information about users of the RCS system through association with a number of services, as discussed above, such as, for example, a location service, a presence service and an identity service. Information received by RCS API 900 from these services is provided to entity discovery engine 300 as inputs for use in discovering and suggesting eligible communication partners.

One example of information provided to RCS API 900 includes presence information provided by a presence service. Examples of presence information include current location, current status, the name of a song being listened to, on-the-phone status, busy-free information and the like. Presence information further includes Open Mobile Alliance Presence information, including Presence/SIMPLE information, which may be provided in the form of PIDF presence tuples, as provided by a presence enabler, or as RCS social presence information (e.g., RCS 'free-text'). This information is provided as an input by RCS API 900 to entity discovery engine 300 for use in discovering and suggesting eligible communication partners.

In one example, RCS API 900, RCS Client 910, entity discovery engine 300 and social network system operate in a circle of trust and are capable of federating information to authorized participants within the circle of trust.

In another example, the RCS system includes local and remote network domains that enables information from one network domain to be federated to information in another domain and further allows entity discovery engine 300 to access information from multiple network domains. Network domains include, for example, geographically determined domains, such as, for example, a first domain for North America and a second domain for Europe. Prior agreement among network providers or service providers establishes parameters for the trusted federation of information across network domains to authorized participants.

In one example, entity discovery engine 300 allows for a user, service or other entity to disappear. Disappearing includes silent removal from existing communication partner lists, as well as removing an entity from being eligible as a communication partner for subsequent suggestions. For example, a user wishing not to be suggested as an eligible communication partner is able to configure their account entry information used by entity discovery engine 300 in a manner that ensures they will not be suggested as an eligible communication partner. Alternatively, a user wishing not to be suggested as an eligible communication partner is able to configure their service level willingness included in presence information to indicate their desire not to be suggested.

In one example, entity discovery engine 300 stores a data set of users desiring to be forgotten, such as, for example, an opt-out list. The data set indicating a desire to be forgotten is used as an input to filter users desiring anonymity, or peace and quiet, from being identified as an eligible communication partner regardless of other eligibility concurrence. In one example, information indicating a desire to be forgotten is stored in data store 302 of entity discovery engine 300 (as shown in FIG. 3). In another example, information indicating a desire to be forgotten is stored in data store 102 of social network system 100 (as shown in FIG. 3). In yet another example, information indicating a desire to be forgotten is applied on receipt and stored for subsequent uses.

Entity discovery engine 300 applies information about the desire to be forgotten to negate or preclude eligibility as a communication partner.

Entity discovery engine 300 requests and receives data sets from numerous information sources, including social network system 100 and other information sources, such as presence services, location services, identity platforms and the like. Using the numerous data sets, entity discovery engine 300 is capable of identifying and attempting to correct discrepancies or errors existing between the information stored by the various information sources.

For example, entity discovery engine 300 may request and receive three data sets of information about user account entries. During the information normalization process (as described above in relation to FIG. 4 and FIG. 9) entity discovery engine 300 realizes that a piece of information from one of the information sources does not correspond to another piece of information from another information source. For example, information from a first information source indicates that a user is in New York, whereas information from another information source indicates that the user is in Los Angeles. On noting this discrepancy, entity discovery engine 300 attempts to correct the discrepancy to increase the reliability and utility of information.

In one example, entity discovery engine 300 corrects the discrepancy by evaluating which location is more recent, by, for example, examining timestamps associated with each record. In another example, entity discovery engine 300 requests updated information from a information source in an attempt to correct the discrepancy through updated, and accurate information by, for example, requesting a current location-fix on the user through a location service or by examining the user's textual location from their presence information. In yet another example, entity discovery engine 300 causes a manual correction to be made, through, for example, a request sent to the user or through administrator input. In an even further example, entity discovery engine 300 evaluates all of the information it has, to determine the most reasonable location, by, for example, counting the number of data sets that indicate the user's location as New York and counting the number of data sets that indicate the user's location as Los Angeles, and then assuming that the location having the greater number of instances is accurate. In yet an another example, entity discovery engine 300 determines that one of the sources of information is a trusted source of information, such as, for example, a verified identity service, and the information from this trusted information source is considered as accurate or is assigned a weighing, or accuracy factor, which is subsequently utilized when weighing or evaluating information from other information sources.

On determining that a discrepancy exists in the information of multiple data sets, and on further determining which information is correct, entity discovery engine 300 corrects the discrepancy by, for example, notifying the source of the incorrect information that the information should be updated and what the correct information is so that the information source may correct its records.

In one example, the discrepancy may be relevant to whether a potential communication partner is an eligible communication partner or not. In this example, if entity discovery engine 300 is unable to resolve a discrepancy that is identified during the process of identifying eligible communication partners, a default policy (such as a service provider policy) is applied to determine whether the potential communication partner is eligible or not. For example, a policy may be applied to render ineligible any potential communication partner if relevant information cannot be accurately determined. For example, where a jurisdictional policy applies to ensure that females aged 18 years or younger are not suggested as an eligible communication partner to males over the age of 30, if a discrepancy about the age of a female user cannot be corrected, the female user is rendered ineligible, by the policy, from being suggested to a male over the age of 30. In another example, a policy may be applied to consider eligible any potential communication partner if relevant information cannot be accurately determined.

Referring now to FIG. 15, shown therein is a block diagram of an example mobile device 1000. The mobile device 1000 comprises a number of components such as a main processor 1002 that controls the overall operation of the mobile device 1000. Communication functions, including data and voice communications, are performed through a communication subsystem 1004. The communication subsystem 1004 receives messages from and sends messages to a network 1202. Network 1202 is, for example, a data network or an IP network which is, for example, either wireless, wireline or fixed line.

In this example embodiment of the mobile device 1000, the communication subsystem 1004 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as EDGE, UMTS and HSDPA, LTE, Wi-Max etc. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 1004 with the network 1202 represents one or more different Radio Frequency (RF) channels, operating according to defined protocols specified for GSM/GPRS communications. With newer network protocols, these channels are capable of supporting both circuit switched voice communications and packet switched data communications.

The main processor 1002 also interacts with additional subsystems such as a Random Access Memory (RAM) 1006, a flash memory 1008, a display 1010, an auxiliary input/output (I/O) subsystem 1012, a data port 1014, a keyboard 1016, a speaker 1018, a microphone 1020, GPS receiver 1021, short-range and mid-range communications 1022 and other device subsystems 1024.

Some of the subsystems of the mobile device 1000 perform communication-related functions, whereas other subsystems provide "resident" or on-device functions. By way of example, the display 1010 and the keyboard 1016 are used for both communication-related functions, such as entering a text message for transmission over the network 1202, and device-resident functions such as a calculator or task list. Display 1010 is a touch-sensitive display or a non touch-sensitive display.

The mobile device 1000 sends and receives communication signals over the network 1202 after required network registration or activation procedures have been completed. Network access is associated with a subscriber or user of the mobile device 1000. To identify a subscriber, in one example the mobile device 1000 uses a subscriber module. Examples of such subscriber modules include a Subscriber Identity Module (SIM) developed for GSM networks, a Removable User Identity Module (RUIM) developed for CDMA networks, a Universal Subscriber Identity Module (USIM) developed for 3G networks such as UMTS, and a software-SIM, such as, for example, those used in Gemalto soft-SIM systems. In the example shown, a SIM/RUIM/USIM 1026 is to be inserted into a SIM/RUIM/USIM interface 1028 in order to communicate with a network. The SIM/RUIM/USIM component 1026 is one type of a conventional "smart card" that can be used to identify a subscriber of the mobile device 1000 and to personalize the mobile device 1000, among other things. Without the component 1026, the mobile device 1000 may not be fully operational for communication with the network 1202. By inserting the SIM/RUIM/USIM 1026 into the SIM/RUIM/USIM interface 1028, a subscriber can access all subscribed services. Services may include: web browsing and messaging such as e-mail, voice mail, SMS, and MMS. More advanced services may include: point of sale, field service and sales force automation. The SIM/RUIM/USIM 1026 includes a processor and memory for storing information. Once the SIM/RUIM/USIM 1026 is inserted into the SIM/RUIM/USIM interface 1028, it is coupled to the main processor 1002. In order to identify the subscriber, the SIM/RUIM/USIM 1026 can include some user parameters such as an International Mobile Subscriber Identity (IMSI). An advantage of using the SIM/RUIM/USIM 1026 is that a subscriber is not necessarily bound by any single physical mobile device. The SIM/RUIM/USIM 1026 may store additional subscriber information for a mobile device as well, including datebook (or calendar) information and recent call information. Alternatively, user identification information can also be programmed into the flash memory 1008.

The mobile device 1000 is typically a battery-powered device and includes a battery interface 1032 for receiving one or more batteries 1030 (typically rechargeable). In at least some embodiments, the battery 1030 can be a smart battery with an embedded microprocessor. The battery interface 1032 is coupled to a regulator (not shown), which assists the battery 1030 in providing power V+ to the mobile device 1000. Although current technology makes use of a battery, future technologies such as micro fuel cells may provide the power to the mobile device 1000.

The mobile device 1000 also includes an operating system 1034 and software components 1036 to 1046 which are described in more detail below. The operating system 1034 and the software components 1036 to 1046 that are executed by the main processor 1002 are typically stored in a persistent store such as the flash memory 1008, which may alternatively be a read-only memory (ROM) or similar storage element (not shown). Those skilled in the art will appreciate that portions of the operating system 1034 and the software components 1036 to 1046, such as specific device applications, or parts thereof, may be temporarily loaded into a volatile store such as the RAM 1006. Other software components can also be included, as is well known to those skilled in the art.

The subset of software applications 1036 that control basic device operations, including data and voice communication applications, may be installed on the mobile device 1000 during its manufacture. Other software applications include a message application 1038 that can be any suitable software program that allows a user of the mobile device 1000 to send and receive electronic messages utilizing one or more message communication protocols. Various alternatives exist for the message application 1038 as is well known to those skilled in the art. Messages that have been sent or received by the user are typically stored in the flash memory 1008 of the mobile device 1000 or some other suitable storage element in the mobile device 1000. In at least some embodiments, some of the sent and received messages may be stored remotely from the mobile device 1000 such as in a data store of an associated host system that the mobile device 1000 communicates with.

The software applications can further comprise a device state module 1040, a Personal Information Manager (PIM) 1042, and other suitable modules (not shown). The device state module 1040 provides persistence, i.e. the device state module 1040 ensures that important device data is stored in persistent memory, such as the flash memory 1008, so that the data is not lost when the mobile device 1000 is turned off or loses power.

The PIM 1042 includes functionality for organizing and managing data items of interest to the user, such as, but not limited to, e-mail, contacts, calendar events, voice mails, appointments, and task items. A PIM application has the ability to send and receive data items via the network 1202. PIM data items may be seamlessly integrated, synchronized, and updated via the network 1202 with the mobile device subscriber's corresponding data items stored and/or associated with a host computer system. This functionality creates a mirrored host computer on the mobile device 1000 with respect to such items. This can be particularly advantageous when the host computer system is the mobile device subscriber's office computer system.

The mobile device 1000 may also comprise a connect module 1044, and an IT policy module (not shown). The connect module 1044 implements the communication protocols that are required for the mobile device 1000 to communicate with the wireless infrastructure and any host system, such as an enterprise system, that the mobile device 1000 is authorized to interface with.

The connect module 1044 includes a set of APIs that can be integrated with the mobile device 1000 to allow the mobile device 1000 to use any number of services associated with the enterprise system. The connect module 1044 allows the mobile device 1000 to establish an end-to-end secure, authenticated communication pipe with a host system (not shown). A subset of applications for which access is provided by the connect module 1044 can be used to pass IT policy commands from the host system to the mobile device 1000. This can be done in a wireless or wired manner. These instructions can then be passed to an IT policy module (not shown) to modify the configuration of the device 1000. Alternatively, in some cases, the IT policy update can also be done over a wired connection.

Social network client application 1046 comprises computer executable instructions to execute the social network application functionality described herein. In one embodiment, social network client application 1046 comprises an RCS Client for use in an RCS system, as described in FIG. 14. Social network client application 1046 and social network client application 125 of FIG. 1 are to be considered analogous components herein.

Other types of software applications or components 1039 can also be installed on the mobile device 1000. These software applications 1039 can be pre-installed applications (i.e. other than message application 1038) or third party applications, which are added after the manufacture of the mobile device 1000. Examples of third party applications include games, calculators, utilities, etc.

The additional applications 1039 can be loaded onto the mobile device 1000 through at least one of the network 1202, the auxiliary I/O subsystem 1012, the data port 1014, the short-range communications subsystem 1022, or any other suitable device subsystem 1024. This flexibility in application installation increases the functionality of the mobile device 1000 and may provide enhanced on-device functions, communication-related functions, or both. For example, secure communication applications may enable electronic commerce functions and other such financial transactions to be performed using the mobile device 1000.

The short-range and mid-range communications subsystem 1022 provides for communication between the mobile device 1000 and different systems or devices, without the use of the network 1202. For example, the subsystem 1022 may include an infrared device and associated circuits and components for short-range communication. Examples of short-range communication standards include standards developed by the Infrared Data Association (IrDA), Bluetooth, Near Field Communication (NFC) and the 802.11 family of standards developed by IEEE. In another embodiment, subsystem 1022 may include components for mid-range communications. One example of mid-range communications is WiMax

In use, a received signal such as a text message, an e-mail message, or web page download may be processed by the communication subsystem 1004 and input to the main processor 1002. The main processor 1002 may then process the received signal for output to the display 1010 or alternatively to the auxiliary I/O subsystem 1012. A subscriber may also compose data items, such as e-mail messages, for example, using the keyboard 1016 in conjunction with the display 1010 and possibly the auxiliary I/O subsystem 1012. The auxiliary subsystem 1012 may comprise devices such as: a touch screen, mouse, track ball, infrared fingerprint detector, or a roller wheel with dynamic button pressing capability. The keyboard 1016 is an alphanumeric keyboard and/or telephone-type keypad. However, other types of keyboards may also be used, such as a virtual or "soft" keyboard rendered as images on a touch screen. A composed item may be transmitted over the network 1202 through the communication subsystem 1004.

For voice communications, the overall operation of the mobile device 1000 in this example is substantially similar, except that the received signals are output to the speaker 1018, and signals for transmission are generated by the microphone 1020. Alternative voice or audio I/O subsystems, such as a voice message recording subsystem, can also be implemented on the mobile device 1000. Although voice or audio signal output is accomplished primarily through the speaker 1018, the display 1010 can also be used to provide additional information such as the identity of a calling party, duration of a voice call, or other voice call related information.

It will be appreciated that any application, module or component exemplified herein that executes instructions or operations may include or otherwise have access to, or be stored on, computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 1000, any component of or related to the wireless infrastructure (not shown), etc., or accessible or connectable thereto. Any application or module herein described may be implemented using computer readable/executable instructions that may be stored or otherwise held by such computer readable media.

It will also be appreciated that the example embodiments and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the diagrams described herein are just for example. There may be many variations to these steps or operations without departing from the spirit of a system and application for social media.

Reference has been made throughout to communication partners in the social networking context but it is to be understood that the principles described herein apply equally to other types of network communication system, such as service discovery, location based services, business discovery and the like. Those skilled in the art will appreciate that necessary modifications may be made to accommodate further types of services without departing from the system and methods described herein.

Although the above has been described with reference to certain specific embodiments, various modifications thereof will be apparent to those skilled in the art without departing from the scope of the claims appended hereto.

## Claims

1. A method of operating an entity discovery engine to suggest eligible communication partners, the method comprising:
applying a metadata to a first data set of a plurality of potential communication partner entries to obtain a criteria set, each potential communication partner associated with information, the criteria set comprising a reduced set of the plurality of potential communication partner entries;
normalizing the criteria set into an information set, the information set comprising a subset of the information associated with each of the reduced plurality of potential communication partner entries of the criteria set;
applying a constraint set to the information set to reduce the number of the plurality of potential communication partner entries of the information set;
evaluating a policy for consistency and applicability to produce an evaluated policy;
applying the evaluated policy to the information set to produce a result set of eligible communication partner entries; and
suggesting the result set.

2. The method of claim 1 further comprising receiving a request message prior to the suggesting the result set.

3. The method of claim 2 wherein the first data set is requested pursuant to the receiving the request message.

4. The method of any one of claims 1 to 3 further comprising:
requesting the metadata from a first information source;
receiving the metadata from a first information source;
requesting the policy from a second information source; and
receiving the policy from a second information source.

5. The method of any one of claims 1 to 4 wherein the suggesting comprises transmitting a message comprising a representation of the result set.

6. The method of any one of claims 1 to 5 further comprising:
requesting a second data set;
receiving a second data set; and
normalizing the first data set and the second data set to a common format.

7. The method of claim 6 further comprising:
identifying a discrepancy between the first data set and the second data set;
determining which of the first data set and the second data set is correct; and
notifying of the discrepancy and the correct data set.

8. The method of any one of claims 1 to 7 wherein the policy is one of a user policy, an enterprise policy, a service policy, a network provider policy and a jurisdictional policy.

9. The method of any one of claims 1 to 8 wherein the policy indicates that the entries of the result set must meet a legal requirement.

10. The method of any one of claims 1 to 9 further comprising:
storing the result set;
receiving an update message comprising update information;
updating the result set using the update information; and
suggesting the updated result set.

11. The method of any one of claims 1 to 10 wherein the metadata comprises a criterion.

12. The method of any one of claims 1 to 11 wherein the policy comprises an indication of a desire to disappear.

13. The method of any one of claims 1 to 12 further comprising receiving presence information and wherein the metadata is related to the presence information.

14. A computer readable medium comprising computer executable instructions for operating an entity discovery engine to suggest eligible communication partners, the computer executable instructions comprising instructions for performing the method according to any one of claims 1 to 13.

15. An entity discovery engine operable to suggest eligible communication partners, the entity discovery engine comprising a processor and memory, the memory storing computer executable instructions for performing the method according to any one of claims 1 to 13.

## Amended claims

### Amended claims in accordance with Rule 137(2) EPC.

**1.** A method of operating an entity discovery engine to suggest eligible electronic communication partners, the method comprising a processor of the entity discovery engine:
determining that eligible electronic communication partners are to be provided in association with an electronic communication device;
applying a metadata to a first data set of a plurality of potential communication partner entries to obtain a criteria set, each potential communication partner associated with information, the criteria set comprising a reduced set of the plurality of potential communication partner entries;
normalizing the criteria set into an information set, the information set comprising a subset of the information associated with each of the reduced plurality of potential communication partner entries of the criteria set;
applying a constraint set to the information set to reduce the number of the plurality of potential communication partner entries of the information set;
evaluating a policy for consistency and applicability to produce an evaluated policy;
applying the evaluated policy to the information set to produce a result set of eligible electronic communication partner entries; and
outputting the result set in association with the electronic communication device.

**2.** The method of claim 1 further comprising receiving a request message prior to the suggesting the result set.

**3.** The method of claim 2 wherein the first data set is requested pursuant to the receiving the request message.

**4.** The method of any one of claims 1 to 3 further comprising:
requesting the metadata from a first information source;
receiving the metadata from a first information source;
requesting the policy from a second information source; and
receiving the policy from a second information source.

**5.** The method of any one of claims 1 to 4 wherein the suggesting comprises transmitting a message comprising a representation of the result set.

**6.** The method of any one of claims 1 to 5 further comprising:
requesting a second data set;
receiving a second data set; and
normalizing the first data set and the second data set to a common format.

**7.** The method of claim 6 further comprising:
identifying a discrepancy between the first data set and the second data set;
determining which of the first data set and the second data set is correct; and
notifying of the discrepancy and the correct data set.

**8.** The method of any one of claims 1 to 7 wherein the policy is one of a user policy, an enterprise policy, a service policy, a network provider policy and a jurisdictional policy.

**9.** The method of any one of claims 1 to 8 wherein the policy indicates that the entries of the result set must meet a legal requirement.

**10.** The method of any one of claims 1 to 9 further comprising:
storing the result set;
receiving an update message comprising update information;
updating the result set using the update information; and
suggesting the updated result set.

**11.** The method of any one of claims 1 to 10 wherein the metadata comprises a criterion.

**12.** The method of any one of claims 1 to 11 wherein the policy comprises an indication of a desire to disappear.

**13.** The method of any one of claims 1 to 12 further comprising receiving presence information and wherein the metadata is related to the presence information.

**14.** A computer readable medium comprising computer executable instructions for operating an entity discovery engine to suggest eligible communication partners, the computer executable instructions comprising instructions for performing the method according to any one of claims 1 to 13.

**15.** An entity discovery engine operable to suggest eligible communication partners, the entity discovery engine comprising a processor and memory, the memory storing computer executable instructions for performing the method according to any one of claims 1 to 13.

**1.** An entity discovery engine (300) configured to suggest eligible electronic communication partners, the entity discovery engine comprising an interface (305) and a data store (302), the data store (302) stores information relevant to the discovery of communication partners for use by the entity discovery engine (300); the functionality of the entity discovery engine (330) being accessible to network communication devices via the interface (305); the interface (305) provides the network communication devices (120) controlled access to the data store (302); the functionality of the entity discovery engine comprises:
applying a metadata to a first data set of a plurality of potential communication partner entries to obtain a criteria set, each potential communication partner associated with information, the criteria set comprising a reduced set of the plurality of potential communication partner entries;
normalizing the criteria set into an information set, the information set comprising a subset of the information associated with each of the reduced plurality of potential communication partner entries of the criteria set;
applying a constraint set to the information set to reduce the number of the plurality of potential communication partner entries of the information set;
evaluating a policy for consistency and applicability to produce an evaluated policy;
applying the evaluated policy to the information set to produce a result set of eligible electronic communication partner entries; and
outputting the result set in association with the electronic communication partners.

**2.** The entity discovery engine of claim 1 being operable to receive a request message prior to the suggesting the result set.

**3.** The entity discovery engine of claim 2 wherein the first data set is requested pursuant to the receiving the request message.

**4.** The entity discovery engine of any one of claims 1 to 3 being further operable to:
request the metadata from a first information source;
receive the metadata from a first information source;
request the policy from a second information source; and
receive the policy from a second information source.

**5.** The entity discovery engine of any one of claims 1 to 4 wherein the suggesting comprises transmitting a message comprising a representation of the result set.

**6.** The entity discovery engine of any one of claims 1 to 5 being further operable to:
request a second data set;
receive a second data set; and
normalize the first data set and the second data set to a common format.

**7.** The entity discovery engine of claim 6 being further operable to:
identify a discrepancy between the first data set and the second data set;
determine which of the first data set and the second data set is correct; and
notify of the discrepancy and the correct data set.

**8.** The entity discovery engine of any one of claims 1 to 7 wherein the policy is one of a user policy, an enterprise policy, a service policy, a network provider policy and a jurisdictional policy.

**9.** The entity discovery engine of any one of claims 1 to 8 wherein the policy indicates that the entries of the result set must meet a legal requirement.

**10.** The entity discovery engine of any one of claims 1 to 9 being further operable to:
store the result set;
receive an update message comprising update information;
update the result set using the update information; and
suggest the updated result set.

**11.** The entity discovery engine of any one of claims 1 to 10 wherein the metadata comprises a criterion.

**12.** The entity discovery engine of any one of claims 1 to 11 wherein the policy comprises an indication of a desire to disappear.

**13.** The entity discovery engine of any one of claims 1 to 12 being further operable to receive presence information and wherein the metadata is related to the presence information.

**14.** A computer readable medium comprising computer executable instructions for operating an entity discovery engine to suggest eligible communication partners, the computer executable instructions comprising instructions for performing the functionality of the entity discovery engine according to any one of claims 1 to 13.
